# EUROPEAN PATENT APPLICATION

(11) **EP 3 904 615 A1**
(43) Date of publication of application: **03.11.2021**
(21) Application number: 19903913.2
(22) Date of filing: 27.12.2019
(51) Int. Cl.: E04B 1/00, G06F 30/10, G06F 30/13

(54) **DESIGN AND CONSTRUCTION ASSISTANCE DEVICE, DESIGN AND CONSTRUCTION ASSISTANCE SYSTEM, DESIGN AND CONSTRUCTION ASSISTANCE METHOD, AND PROGRAM**

(30) Priority: 28.12.2018 JP 2018247978
(71) Applicant: MITSUBISHI CHEMICAL HOLDINGS CORPORATION, Tokyo 100-8251 (JP)
(72) Inventor: OKADA, Satoru, Tokyo 100-8251 (JP); SHIRAKURA, Yosuke, Tokyo 100-8251 (JP); ICHIKAWA, Naoko, Tokyo 100-8251 (JP)
(74) Representative: Hoffmann Eitle
(86) International application number: PCT/JP2019/051370
(87) International publication number: WO 2020/138397

(57) **Abstract**

A design and construction assistance device includes a first acquirer configured to acquire first information including at least dimension data of a construction material to be attached to a target surface, a second acquirer configured to acquire second information indicating the type of attachment structure when the construction material is attached to the target surface, a production drawing generator configured to generate a production drawing for processing the construction material on the basis of the first information, the second information, and processing rules set for each type of attachment structure, and an output configured to output the production drawing generated by the production drawing generator.

## Description

### [Technical Field]

The present invention relates to a design and construction assistance device, a design and construction assistance system, a design and construction assistance method, and a program.

Priority is claimed on Japanese Patent Application No. 2018-247978, filed December 28, 2018, the content of which is incorporated herein by reference.

### [Background Art]

A technique in which a basic design drawing for a building is created as a three-dimensional drawing, and two-dimensional design drawings (a plan view, a sectional detail drawing, and the like), construction drawings (an interior elevation drawing, a work construction drawing, and the like), and partial detail drawings (a partial sectional detail drawing, an elevation drawing, a parts list, and the like) are created from the three-dimensional drawing has been disclosed (for example, Patent Document 1).

### [Citation List]

### [Patent Document]

[Patent Document 1]
Japanese Unexamined Patent Application, First Publication No. 2002-197126

### [Summary of Invention]

### [Technical Problem]

However, in the technique disclosed in Patent Document 1, even if it is possible to generate a two-dimensional design drawing in which an outer wall and a floor are tiled from a three-dimensional drawing for a building, it may be unclear what kind of processing is required for a construction material to be attached according to the tiling. For example, a processor may process a construction material to be attached to an outer wall or a floor on the basis of a design drawing, but a form of processing of the construction material may differ depending on an attachment structure when the construction material is attached to a target surface such as an outer wall or a floor. Thus, it is necessary to create a more detailed production drawing (a working drawing, a general drawing, and the like) for processing a construction material from the beginning.

The present invention has been made in view of the above circumstances, and an object thereof is to provide a design and construction assistance device, a design and construction assistance system, a design and construction assistance method, and a program capable of automatically creating a more detailed production drawing (a working drawing, a general drawing, and the like) when a construction material to be attached to a target surface is processed.

### [Solution to Problem]

The present invention has been made to solve the above problems, and, according to an aspect of the present invention, there is provided a design and construction assistance device including a first acquirer configured to acquire first information including at least dimension data of a construction material to be attached to a target surface; a second acquirer configured to acquire second information indicating the type of attachment structure when the construction material is attached to the target surface; a production drawing generator configured to generate a production drawing for processing the construction material on the basis of the first information, the second information, and processing rules set for each type of attachment structure; and an output configured to output the production drawing generated by the production drawing generator.

According to another aspect of the present invention, there is provided a design and construction assistance system including a third acquirer configured to acquire target surface data from a storage storing data regarding a target surface that is a target to which a construction material is to be attached; a receptioner that receives information regarding dimensions designated as reference dimensions of the construction material to be attached to the target surface; an arrangement information generator configured to generate arrangement information regarding the number, dimensions, and arrangement of the construction material to be attached to the target surface according to predetermined arrangement rules on the basis of the target surface data and the designated dimensions; a first output configured to output the arrangement information generated by the arrangement information generator; a first acquirer configured to acquire, as first information, the arrangement information output by the first output; a second acquirer configured to acquire second information indicating the type of attachment structure when the construction material is attached to the target surface; a production drawing generator configured to generate a production drawing for processing the construction material on the basis of at least information regarding the dimensions of the construction material to be arranged on the target surface in the first information, the second information, and processing rules set for each type of attachment structure; and a second output configured to output the production drawing generated by the production drawing generator.

According to still another aspect of the present invention, there is provided a design and construction assistance method in a design and construction assistance device, including causing a first acquirer to acquire first information including at least dimension data of a construction material to be attached to a target surface; causing a second acquirer to acquire second information indicating the type of attachment structure when the construction material is attached to the target surface; causing a production drawing generator to generate a production drawing for processing the construction material on the basis of the first information, the second information, and processing rules set for each type of attachment structure; and causing an output to output the production drawing generated by the production drawing generator.

According to still another aspect of the present invention, there is provided a design and construction assistance method in a design and construction assistance system, the design and construction assistance method including causing a third acquirer to acquire target surface data from a storage storing data regarding a target surface that is a target to which a construction material is to be attached; causing a receptioner to receive information regarding dimensions designated as reference dimensions of the construction material to be attached to the target surface; causing an arrangement information generator to generate arrangement information regarding the number, dimensions, and arrangement of the construction material to be attached to the target surface according to a predetermined arrangement rule on the basis of the target surface data and the designated dimensions; causing a first output to output the arrangement information generated by the arrangement information generator; causing a first acquirer to acquire, as first information, the arrangement information output by the first output; causing a second acquirer to acquire second information indicating the type of attachment structure when the construction material is attached to the target surface; causing a production drawing generator to generate a production drawing for processing the construction material on the basis of at least information regarding the dimensions of the construction material to be arranged on the target surface in the first information, the second information, and processing rules set for each type of attachment structure; and causing a second output to output the production drawing generated by the production drawing generator.

According to still another aspect of the present invention, there is provided a program causing a computer to execute acquiring first information including at least dimension data of a construction material to be attached to a target surface; acquiring second information indicating the type of attachment structure when the construction material is attached to the target surface; generating a production drawing for processing the construction material on the basis of the first information, the second information, and processing rules set for each type of attachment structure; and outputting the generated production drawing.

According to still another aspect of the present invention, there is provided a program causing a computer to execute: acquiring target surface data from a storage storing data regarding a target surface that is a target to which a construction material is to be attached; receiving information regarding dimensions designated as reference dimensions of the construction material to be attached to the target surface; generating arrangement information regarding the number, dimensions, and arrangement of the construction material to be attached to the target surface according to a predetermined arrangement rule on the basis of the target surface data and the designated dimensions; outputting the generated arrangement information; acquiring the arrangement information as first information; acquiring second information indicating the type of attachment structure when the construction material is attached to the target surface; generating a production drawing for processing the construction material on the basis of at least information regarding the dimensions of the construction material to be arranged on the target surface in the first information, the second information, and processing rules set for each type of attachment structure; and outputting the generated production drawing.

### [Advantageous Effects of Invention]

According to the present invention, it is possible to automatically create a more detailed production drawing (a working drawing, a general drawing, and the like) when a construction material to be attached to a target surface is processed.

### [Brief Description of Drawings]

Fig. 1 is a diagram illustrating an outline of a design and construction assistance system according to an embodiment.
Fig. 2 is a diagram illustrating definition of terms related to arrangement of construction material panels in the embodiment.
Fig. 3 is a block diagram illustrating an example of a configuration of a construction material arrangement processing device according to the embodiment.
Fig. 4 is a diagram illustrating an example of construction material panel information.
Fig. 5 is a diagram showing an example of a material configuration of the construction material panel.
Fig. 6 is a diagram illustrating an example of reference data of each country.
Fig. 7 is a diagram illustrating an example of a method of arranging a face panel module on a target surface.
Fig. 8 is a diagram illustrating an example in which construction material panels are arranged on a 2D target surface.
Fig. 9 is a diagram illustrating an example in which construction material panels are arranged on a 3D target surface.
Fig. 10A is a diagram illustrating an example of an operation screen for receiving input information from a user.
Fig. 10B is a diagram illustrating examples of dimensions of a construction material panel that are selectable on the operation screen.
Fig. 11 is a flowchart illustrating a first example of a construction material arrangement process according to the embodiment.
Fig. 12 is a flowchart illustrating a second example of a construction material arrangement process according to the embodiment.
Fig. 13 is a flowchart illustrating a third example of a construction material arrangement process according to the embodiment.
Fig. 14 is a flowchart illustrating a fourth example of a construction material arrangement process according to the embodiment.
Fig. 15 is a flowchart illustrating a fifth example of a construction material arrangement process according to the embodiment.
Fig. 16 is a diagram showing an outline of a production drawing according to the embodiment.
Fig. 17 is a block diagram illustrating an example of a configuration of a design and construction assistance device according to the embodiment.
Fig. 18 is a diagram illustrating an example of information regarding a regulation rule.
Fig. 19 is a diagram illustrating an outline of processing rules in an A-1 construction method and an A-2 construction method.
Fig. 20 is a diagram illustrating an outline of processing rules in a B-1 construction method.
Fig. 21 is a diagram illustrating an outline of processing rules in a B-2 construction method.
Fig. 22 is a diagram illustrating an outline of processing rules in a C-1 construction method and a C-2 construction method.
Fig. 23 is a diagram illustrating an outline of processing rules in a C-3 construction method.
Fig. 24 is a flowchart illustrating a first example of a production drawing generation process according to the embodiment.
Fig. 25 is a flowchart illustrating a second example of a production drawing generation process according to the embodiment.
Fig. 26 is a flowchart illustrating a third example of a production drawing generation process according to the embodiment.

### [Description of Embodiments]

Hereinafter, an embodiment of the present invention will be described with reference to the drawings.

### (Outline of system)

First, an outline of a design and construction assistance system according to the present embodiment will be described.

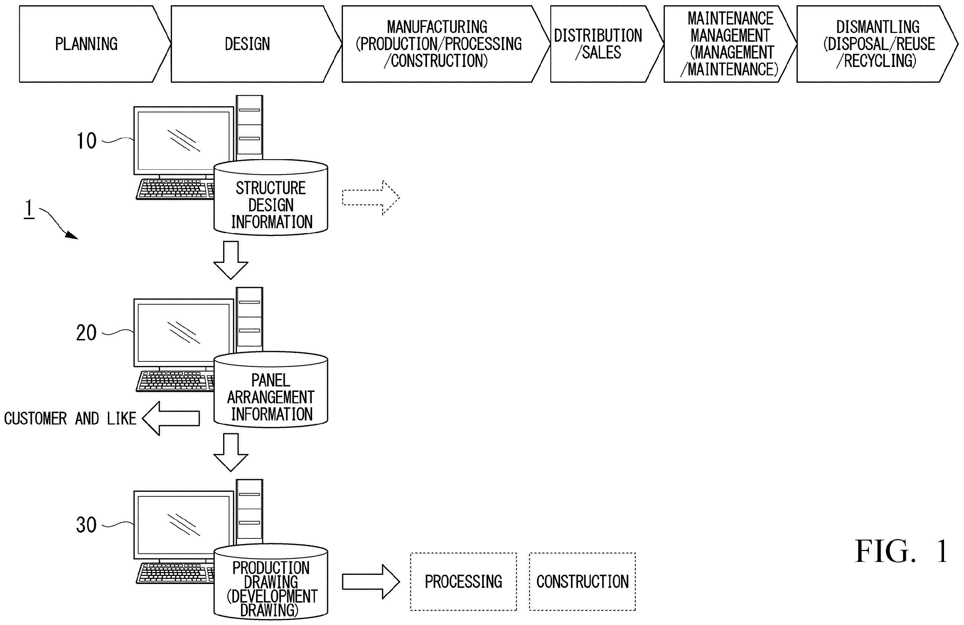

Fig. 1 is a diagram illustrating an outline of a design and construction assistance system according to the present embodiment. An illustrated design and construction assistance system 1 creates, in a construction field, three-dimensional (3D) data regarding the design of a structure such as a building, and also builds an information model (building information modeling: BIM) including attribute information regarding the building such as a name, finishes, specifications and performances of materials or members, and costs in addition to 3D data related to design information. For example, the design and construction assistance system 1 manages, provides, and utilizes information regarding construction materials to be shared by clients, designers, construction material manufacturers, manufacturers (producers/processors/constructors), management companies, and the like on a digital platform that performs a life cycle management sequence from product planning to design, manufacturing (production/processing/ construction), distribution/sales, maintenance management (management/maintenance), and dismantling (disposal/reuse/recycling). This contributes to efficient creation of high-quality buildings.

In the present embodiment, among constituents of the design and construction assistance system 1, constituents related to portions from design to processing of a construction material panel to be attached to an outer wall, an inner wall, a ceiling, a floor, and the like of a building will be described in detail. The design and construction assistance system 1 is configured to include a 3D-computer-aided design (CAD) device 10, a construction material arrangement processing device 20, and a design and construction assistance device 30.

The 3D-CAD device 10 creates 3D data regarding design of a structure such as a planned building, and stores structure design information including the created 3D data in an internal or external storage. The 3D-CAD device 10 outputs the structure design information including the 3D data in response to a request. A designer performs detailed design such as exterior design or interior design on the basis of the structure design information. A manufacturer (producer/processor/constructor) manufactures (produces/processes/constructs) a construction material or the like of each portion forming the structure on the basis of the structure design information (3D data or the like) or detailed design information.

The construction material arrangement processing device 20 extracts a target surface to which a construction material panel is to be attached from the structure design information (3D data or the like) output by the 3D-CAD device 10, and allocates the construction material panel to be arranged on the target surface. The construction material arrangement processing device 20 generates and outputs arrangement information regarding the number, dimensions, and arrangement of construction material panels to be arranged on the target surface. The construction material arrangement processing device 20 may generate an image of a state in which the construction material panels are attached to the target surface on the basis of the generated arrangement information.

The design and construction assistance device 30 generates a production drawing or a construction drawing for processing the construction material panel to be arranged on the target surface. For example, the design and construction assistance device 30 generates and outputs a production drawing for the construction material panel to be arranged on the target surface on the basis of the arrangement information output by the construction material arrangement processing device 20. A processor processes the construction material panel on the basis of the production drawing.

### (Configuration of construction material arrangement processing device 20)

Next, a configuration of the construction material arrangement processing device 20 according to the present embodiment will be described in detail.

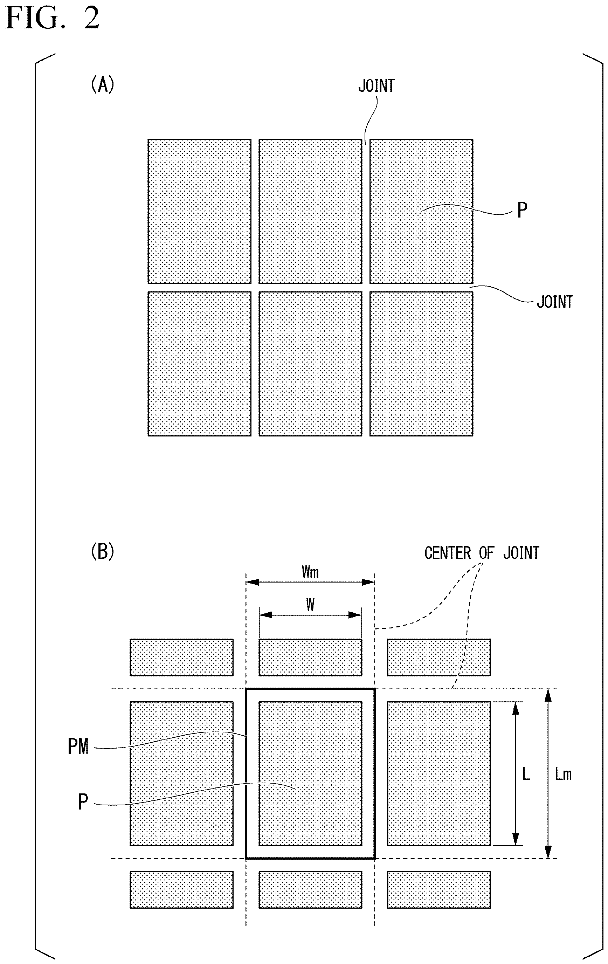

First, definition of terms related to arrangement of construction material panels in the present embodiment will be described. Fig. 2 is a diagram illustrating definitions of terms related to arrangement of construction material panels. As illustrated in Fig. 2(A), a surface of a construction material panel that is seen from in front will be referred to as a face panel P. A gap between two adjacent face panels P will be referred to as a joint. As illustrated in Fig. 2(B), a horizontal dimension (horizontal width) of the face panel P is indicated by W, and a core dimension (horizontal width) from the center of a left joint of the face panel P to the center of a right joint thereof is indicated by Wm. A vertical dimension (vertical width) of the face panel P is indicated by L, and a core dimension (vertical width) from the center of an upper joint of the face panel P to the center of a lower joint thereof is indicated by Lm.

In other words, a region enclosed according to the horizontal dimension W and the vertical dimension L is the face panel P. In contrast, a region enclosed according to the horizontal dimension Wm and the vertical dimension Lm will be referred to as a face panel module PM. For example, allocation of construction material panels when the construction material arrangement processing device 20 arranges the construction material panels may be performed by using the dimensions Wm and Lm of the face panel module PM.

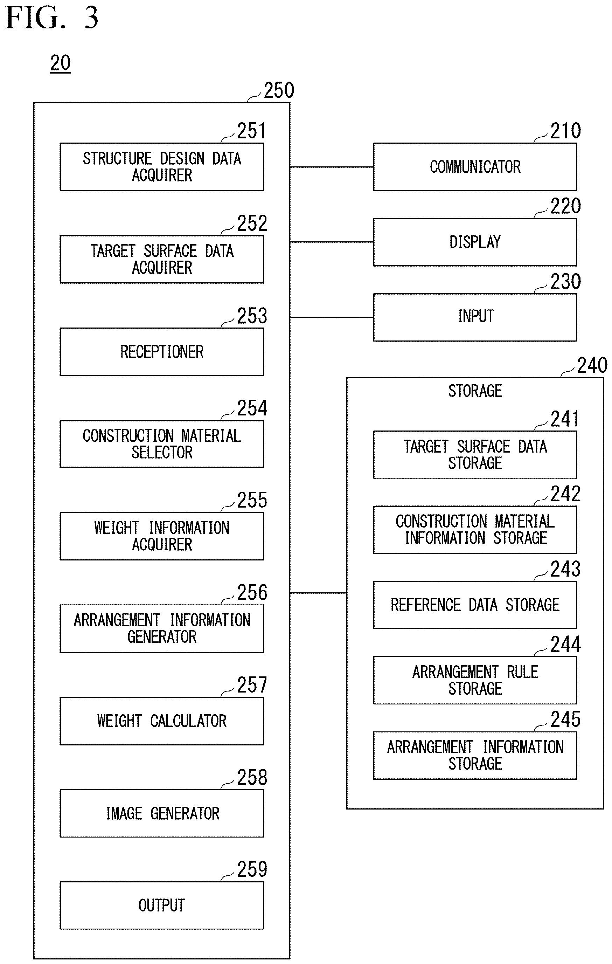

Fig. 3 is a block diagram illustrating an example of a configuration of the construction material arrangement processing device 20 according to the present embodiment. The construction material arrangement processing device 20 is configured to include a communicator 210, a display 220, an input 230, a storage 240, and a controller 250.

The communicator 210 is configured to include, for example, a plurality of Ethernet (registered trademark) ports, a plurality of digital input/output ports such as USBs, or wireless communication ports such as for WIFI (registered trademark) or mobile phone lines, and performs communication with other devices or terminals via a communication network under the control of the controller 250.

The display 220 is a display that displays information such as an image or text, and is configured to include, for example, a liquid crystal display panel or an organic electroluminescence (EL) display panel.

The input 230 receives an operation of a user on a keyboard, a mouse, a touch pad, or the like. The input 230 may be configured as a touch panel integrally with the display 220. The input 230 may receive various instructions using vocal sound that is input to a microphone or the like.

The storage 240 includes, for example, a hard disk drive (HDD), a solid state drive (SSD), an electrically erasable programmable read only memory (EEPROM), a read only memory (ROM), and a random access memory (RAM), and stores various pieces of information, images, programs, and the like. The storage 240 is not limited to being built into the construction material arrangement processing device 20, and may be an external storage device connected thereto via a digital input/output port such as a USB.

For example, the storage 240 is configured to include a target surface data storage 241, a construction material information storage 242, a reference data storage 243, an arrangement rule storage 244, and an arrangement information storage 245.

The target surface data storage 241 stores the structure design information (3D data or the like) acquired from the 3D-CAD device 10, target surface data included in the 3D data, and the like.

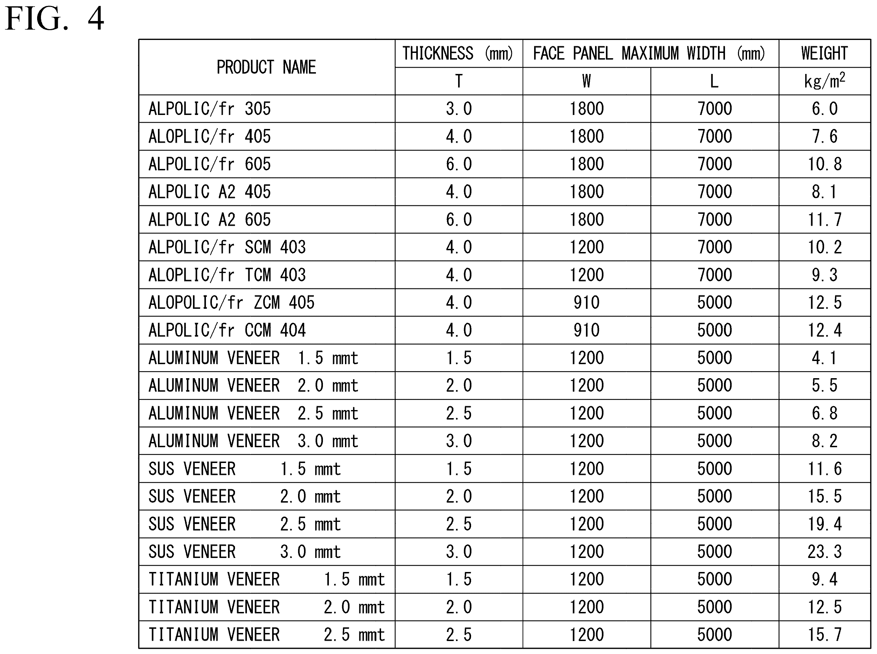

The construction material information storage 242 stores construction material panel information regarding a construction material panel to be attached to a target surface. Fig. 4 is a diagram illustrating an example of the construction material panel information. The illustrated construction material panel information is associated with the product name (commercial product name), the thickness, maximum widths (the maximum dimensions of W and L) of the face panel P, the weight per unit area, the color (color type), the finish (the finish type), cost, and the like. A product (commercial product) registered in the construction material panel information is an option for a construction material panel to be attached to a target surface.

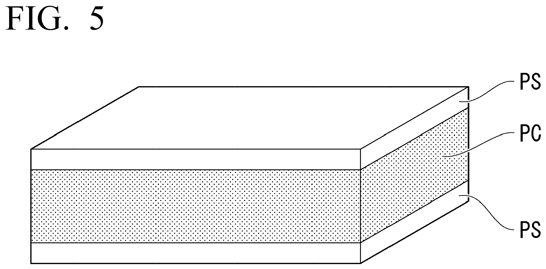

Fig. 5 is a diagram showing an example of a material configuration of a construction material panel. The illustrated construction material panel has a configuration in which surface materials PS are stuck to both sides of a core material PC. As the core material PC, a resin such as polyethylene or foamed polyethylene, a nonflammable material made of a resin containing a filler, or the like is used. As the surface material PS, aluminum, stainless steel, titanium, galvalume steel plate (registered trademark), steel, or the like is used. One or both of surfaces of the surface material PS are subjected to surface treatment. The surface treatment includes polyester resin coating, fluororesin coating, antibacterial/antifungal coating, conductive coating, primer treatment, mirror finishing, and the like.

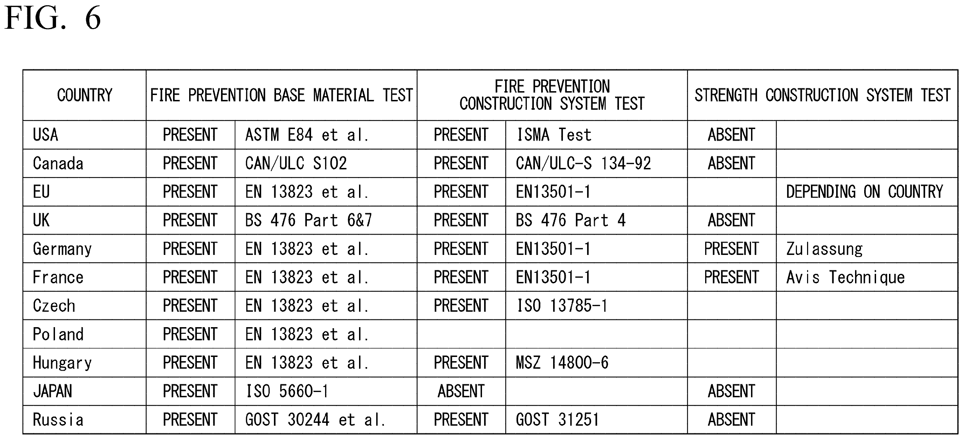

The reference data storage 243 stores reference data for fire prevention performance and strength references stipulated by laws and the like in each country. Fig. 6 is a diagram illustrating an example of the reference data.

The illustrated reference data is associated with references such as a fire prevention base material test, a fire prevention construction system test, a strength construction system test, and the like, which are set for each country. Such a reference is associated with the type of construction material panel conforming to the reference. Consequently, a country in which a building will be constructed is selected, and thus the type of construction material panel conforming to the reference of the country can be selected or set as an option.

In the reference data storage 243, the degree of fire prevention performance is simply associated with the type of construction material panel conforming to the degree of fire prevention performance. For example, in the case of Japan, the degree of fire prevention performance is classified into flame-retardant, quasi-nonflammable, and nonflammable. Flame-retardant, quasi-nonflammable, and nonflammable are set as options, and thus the type of construction material panel conforming to the selected degree of fire prevention performance can be selected or set as an option. The reference data is not limited to reference data of each country, and may be reference data regarding references prescribed in prefectures, states, municipalities, specific areas, and the like.

The arrangement rule storage 244 stores arrangement rule information for arranging construction material panels to be attached to a target surface. When the construction material arrangement processing device 20 automatically arranges construction material panels, the face panel module PM obtained by adding dimensions of a joint to dimensions of the face panel P is arranged. Hereinafter, an example of an arrangement rule for a construction material panel will be described.

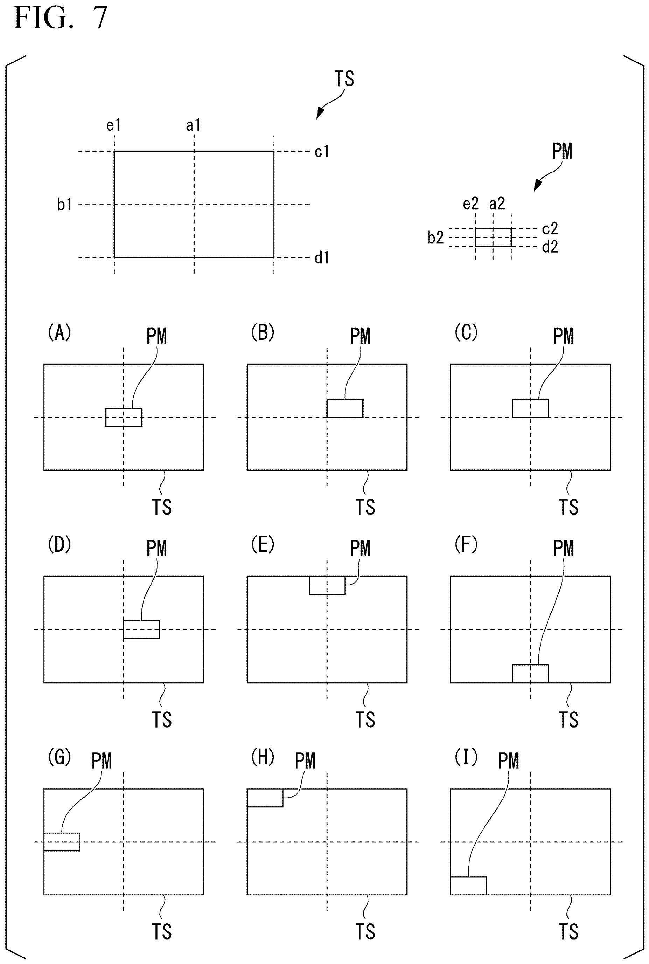

Fig. 7 is a diagram illustrating an example of a method of arranging the face panel module PM on a target surface. An illustrated target surface TS indicates a target surface to which a construction material panel is attached. Here, a line that vertically passes through the horizontal center of the target surface TS will be referred to as a target surface reference vertical center line a1. A line that horizontally passes through the vertical center of the target surface TS will be referred to as a target surface reference horizontal center line b1. An uppermost horizontal line of the target surface TS will be referred to as a target surface reference uppermost line c1. A lowermost horizontal line of the target surface TS will be referred to as a target surface reference lowermost line d1. A line that vertically passes through a left end of the target surface TS will be referred to as a target surface reference left end line e1. The illustrated face panel module PM indicates a reference position of a face panel module that is initially arranged when arrangement of the face panel module PM on the target surface TS is determined. Here, a line that vertically passes through the horizontal center of the face panel module PM will be referred to as a face panel module reference vertical center line a2. A line that horizontally passes through the vertical center of the face panel module PM will be referred to as a face panel module reference horizontal center line b2. An uppermost horizontal line of the face panel module PM will be referred to as a face panel module reference uppermost line c2. A lowermost horizontal line of the face panel module PM will be referred to as a face panel module reference lowermost line d2. A line that vertically passes through a left end of the face panel module PM will be referred to as a face panel module reference left end line e2.

For example, as an arrangement method of arranging the face panel module PM at a reference position of the target surface TS, nine types of arrangement rules illustrated in Figs. 7(A) to 7(I) are defined.
(A) The face panel module PM is arranged at the reference position such that the target surface reference vertical center line a1 overlaps the face panel module reference vertical center line a2, and the target surface reference horizontal center line b1 overlaps the face panel module reference horizontal center line b2, and then the face panel modules PM are consecutively arranged in the upward-downward direction and leftward-rightward direction.
(B) The face panel module PM is arranged at the reference position such that the target surface reference vertical center line a1 overlaps the face panel module reference left end line e2, and the target surface reference horizontal center line b1 overlaps the face panel module reference horizontal center line b2, and then the face panel modules PM are consecutively arranged in the upward-downward direction and leftward-rightward direction.
(C) The face panel module PM is arranged at the reference position such that the target surface reference vertical center line a1 overlaps the face panel module reference vertical center line a2, and the target surface reference horizontal center line b1 overlaps the face panel module reference lowermost line d2, and then the face panel modules PM are consecutively arranged in the upward-downward direction and leftward-rightward direction.
(D) The face panel module PM is arranged at the reference position such that the target surface reference vertical center line a1 overlaps the face panel module reference left end line e2, and the target surface reference horizontal center line b1 overlaps the face panel module reference horizontal center line b2, and then the face panel modules PM are consecutively arranged in the upward-downward direction and leftward-rightward direction.
(E) The face panel module PM is arranged at the reference position such that the target surface reference vertical center line a1 overlaps the face panel module reference vertical center line a2, and the target surface reference uppermost line c1 overlaps the face panel module reference uppermost line c2, and then the face panel modules PM are consecutively arranged in the downward direction and leftward-rightward direction.
(F) The face panel module PM is arranged at the reference position such that the target surface reference vertical center line a1 overlaps the face panel module reference vertical center line a2, and the target surface reference lowermost line d1 overlaps the face panel module reference lowermost line d2, and then the face panel modules PM are consecutively arranged in the upward direction and the leftward-rightward direction.
(G) The face panel module PM is arranged at the reference position such that the target surface reference left end line e1 overlaps the face panel module reference left end line e2, and the target surface reference horizontal center line b1 overlaps the face panel module reference horizontal center line b2, and then the face panel modules PM are consecutively arranged in the upward-downward direction and the rightward direction.
(H) The face panel module PM is arranged at the reference position such that the target surface reference uppermost line c1 overlaps the face panel module reference uppermost line c2, and the target surface reference left end line e1 overlaps the face panel module reference left end line e2, and then the face panel modules PM are consecutively arranged in the downward direction and the rightward direction.
(I) The face panel module PM is arranged at the reference position such that the target surface reference lowermost line d1 overlaps the face panel module reference lowermost line d2, and the target surface reference left end line e1 overlaps the face panel module reference left end line e2, and then the face panel modules PM are consecutively arranged in the upward direction and the rightward direction.

As an arrangement rule in a case where the construction material arrangement processing device 20 automatically sequentially generates construction material panel arrangement information with respect to a plurality of target surfaces, a target surface on which the face panel module PM is initially arranged may be set to, for example, a surface having a main entrance of a building, a largest target surface, or a target surface designated by a customer, and then the face panel module PM may be similarly arranged on a plurality of remaining target surfaces in the same arrangement rule. An arrangement rule may be employed in which the face panel module PM is consecutively arranged on a plurality of target surfaces in a clockwise or counterclockwise direction starting from a target surface on which the face panel module PM is initially arranged.

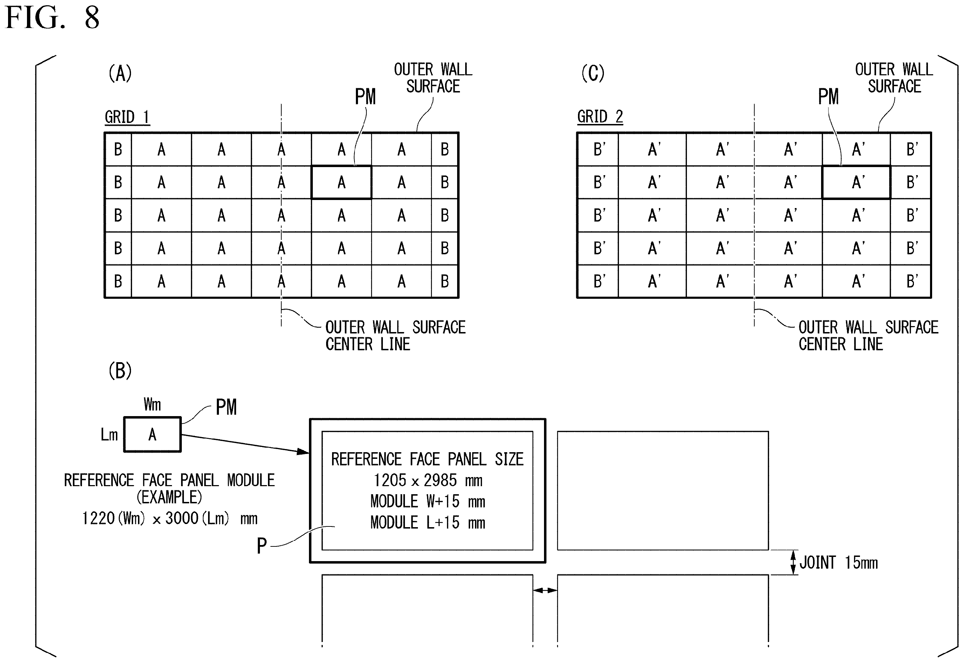

Fig. 8 is a diagram illustrating an example in which construction material panels are arranged on a 2D target surface. Fig. 8 illustrates an example in which a target surface is an outer wall surface. An outer wall surface center line corresponds to the target surface reference vertical center line a1 in Fig. 7. Fig. 8(A) illustrates an arrangement example in which the face panel modules PM are arranged in a grid shape in the arrangement rule defined in Fig. 7(A). Fig. 8(B) illustrates details of the arrangement example in Fig. 8(A). Herein, an example is illustrated in which dimensions of the face panel module PM used as a reference (reference face panel module) are Wm = 1220 mm and Lm = 3000 mm. In this case, the dimensions of the face panel module PM are dimensions obtained by adding dimensions (W = 1205 mm and L = 2985 mm) of the face panel P (reference face panel) used as a reference to a joint width (15 mm). Fig. 8(C) illustrates an arrangement example in a case where the face panel modules PM are arranged in a grid shape in the arrangement rule defined in Fig. 7(D).

As shown in the arrangement examples in Figs. 8(A) and 8(C), some or all of the face panel modules PM arranged at the upper, lower, left, and right ends of each target surface (outer wall surface) may be accessories (that is, dimensions thereof different from those of the reference face panel module). In the illustrated example, the face panel modules PM (the face panel modules indicated by "B" or "B"') arranged at the left and right ends have dimensions smaller than those of the reference face panel modules PM (the face panel modules indicated by "A" or "A"') arranged at the center. This occurs in a case where a dimension of a target surface is not an integer multiple of a dimension of the reference face panel module PM. A dimension corresponding a fraction at the integer multiple is a dimension of the face panel module PM arranged at the end. In a case where a fraction at the integer multiple is a dimension smaller than a predetermined length (for example, in a case where a single component is too short), it may be handled that the adjacent face panel module PM has an extended dimension corresponding to the fraction. In other words, the face panel module PM arranged at each of the upper, lower, left, and right ends may have dimensions smaller or larger than those of the reference face panel module PM arranged at the center.

As described above, in a case of a building, ceiling heights of the bottom (first floor) and the top (top floor) may differ from those of middle floors, and a size of a target surface may differ depending on the floors. Thus, for example, even if the dimensions are such that no accessory is generated on the target surface of the middle floor, accessories may be required at the bottom (first floor) and the top (top floor). In a case where a target surface of the bottom (first floor) is set to have dimensions such that an accessory is not generated, an accessory may be necessary in the middle floors and the top (top floor). Similarly, in a case where a target surface of the top (top floor) is set to have dimensions such that an accessory is not generated, an accessory may be necessary in the middle floors and the bottom (bottom floor).

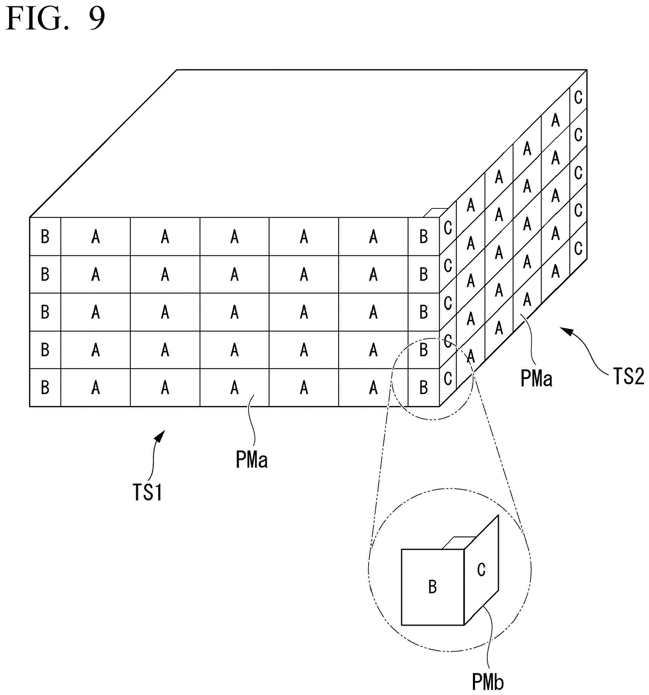

Fig. 9 is a diagram illustrating an example in which construction material panels are arranged on a 3D target surface. The construction material arrangement processing device 20 may allocate construction material panels to portions over a plurality of target surfaces. The illustrated example is an arrangement example in a case where the face panel modules PM are arranged on a target surface TS1 and a target surface TS2 adjacent to each other. In the illustrated example, the face panel module PM in an "A" portion used as a reference is indicated by the reference sign PMa. Here, each of dimensions (area) of a "B" portion at the right end of the target surface TS1 and dimensions (area) of a "C" portion at the left end of the target surface TS2 is different from dimensions (area) of the "A" portion used as a reference. For example, each of a width dimension of the "B" portion and a width dimension of the "C" portion is smaller than a width dimension of the "A" portion. The dimensions of the "B" portion and the dimensions of the "C" portion may be the same as or different from each other. Fig. 9 illustrates the example in which the dimensions of the reference face panel module PMa of the target surface TS1 and the dimensions of the reference face panel module PMa of the target surface TS2 are the same as each other, but the dimensions thereof may be different from each other.

For example, an arrangement rule is defined such that, at a protruding corner where the right end of the target surface TS1 and the left end of the target surface TS2 meet at a right angle, the face panel module PMb as a single component into which the "B" portion at the right end of the target surface TS1 and the "C" portion at the left end of the target surface TS2 are integrated is arranged instead of respectively arranging the face panel modules (two face panel modules) on the "B" portion at the right end of the target surface TS1 and the "C" portion at the left end of the target surface TS2. In other words, it is defined as the arrangement rule to paste a single construction material panel (single component) over two target surfaces. An angle of the protruding corner is not limited to a right angle, and may be any angle. In other words, a construction material panel subjected to folding processing according to an angle of the protruding corner may be attached to the protruding corner.

The example illustrated in Fig. 9 is an example in which construction material panels are arranged on two surfaces such as the target surface TS1 and the target surface TS2 on the right side of the target surface TS1, but there is no limitation to two surfaces, and construction material panels may be similarly arranged on other surfaces. For example, construction material panels may be arranged on two surfaces such as the target surface TS1 and a surface on the upper side of the target surface TS1, two surfaces such as the target surface TS1 and a surface on the lower side of the target surface TS1, and two surfaces such as the target surface TS1 and a surface on the left side of the target surface TS1 along with protruding corners thereof. Construction material panels may be arranged on three or more surfaces including other surfaces in addition to two surfaces such as the target surface TS1 and the target surface TS2. Construction material panels may be arranged on two surfaces other than the two surfaces such as the target surface TS 1 and the target surface TS2 or three or more surfaces along with a protruding corner and/or a recessed corner thereof. In this case, a construction material panel as an integrated single component may be allocated to a portion (a protruding corner and/or a recessed corner) over two surfaces among three or more target surfaces, and a construction material panel as an integrated single component may be allocated to a portion (a protruding corner and/or a recessed corner) over three or more target surfaces. The example illustrated in Fig. 9 is an example in which the face panel module PMb integrated over a plurality of target surfaces is arranged at the protruding corner, but a face panel module integrated over a plurality of target surfaces may be arranged at a recessed corner (for example, in a case where the illustrated protruding corner corresponds to an outer wall surface, the recessed corner corresponds to an inner wall surface inside the outer wall surface). Face panel modules integrated over a plurality of target surfaces do not need to be arranged on some or all protruding corners or recessed corners, and a face panel module may be arranged on each target surface. As an arrangement rule, a shape of a structure such as a building may be captured in 3D, and may thus be optimized to minimize the number of face panel modules serving as accessories.

The arrangement information storage 245 stores the arrangement information, generated by the construction material arrangement processing device 20, in which construction material panels are arranged on a target surface. For example, the arrangement information stores information specifying a structure, information specifying a target surface, and information regarding arrangement such as an arrangement pattern, an arrangement orientation, dimensions of the face panel module PM, and dimensions of a joint in association with attribute information.

The attribute information includes, for example, the type (the product name or the like), the color, the finish, and the weight of construction material.

Referring to Fig. 3 again, the controller 250 is configured to include a central processing unit (CPU) and the like, and realizes various functions by executing the programs stored in the storage 240. For example, the controller 250 is configured to include, as realized functional configurations, a structure design data acquirer 251, a target surface data acquirer 252, a receptioner 253, a construction material selector 254, a weight information acquirer 255, an arrangement information generator 256, a weight calculator 257, an image generator 258, and an output 259.

The structure design data acquirer 251 acquires design information of a structure such as a building, designed by the 3D-CAD device 10, from the 3D-CAD device 10 via the communicator 210. The design information including 3D data regarding design of a structure including a plurality of target surfaces that are targets to which construction material panels are attached is stored in an internal or external storage of the 3D-CAD device 10. For example, the structure design data acquirer 251 acquires the design information including at least data regarding a target surface that is a target to which construction material panels are attached from the 3D-CAD device 10. The structure design data acquirer 251 stores the acquired structure design information into the target surface data storage 241.

The target surface data acquirer 252 acquires data (2D data or 3D data) regarding a target surface that is a target to which a construction material panel is attached from the target surface data storage 241.

The receptioner 253 receives various pieces of input information that are input from a user via the input 230. For example, the receptioner 253 receives information specifying a target surface that is a target to which a construction material panel is attached on the basis of the user's operation on the input 230. The receptioner 253 receives information regarding dimensions designated as a reference dimensions of a construction material panel to be attached to a target surface on the basis of the user's operation on the input 230. The reference dimensions are dimensions of the face panel module PM used as a reference (reference face panel module) described with reference to Fig. 8. In addition to the reference dimensions of the construction material panel attached to the target surface, the receptioner 253 may further receive information regarding the color and the finish of the construction material panel, or the orientation or the arrangement pattern in which the construction material panel is attached to the target surface on the basis of the user's operation on the input 230.

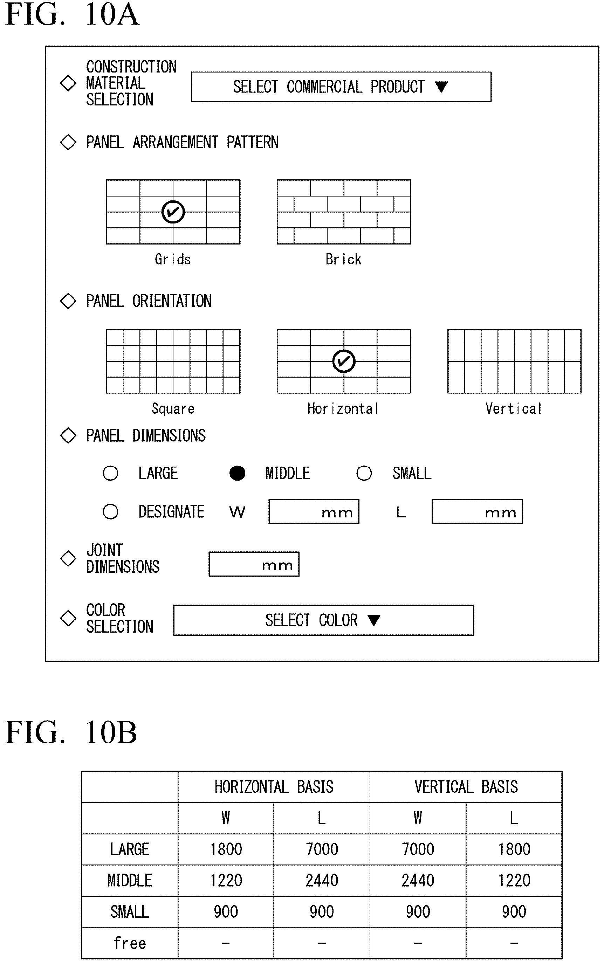

Fig. 10A is a diagram illustrating an example of an operation screen for the receptioner 253 receiving input information from the user. Fig. 10A illustrates an example of the operation screen for allowing the user to input a condition when a construction material panel is arranged on a target surface.

An item "construction material selection" is a selection item for selecting the type of construction material panel, and, for example, the product name (commercial product name) of the construction material panel information stored in the construction material information storage 242 illustrated in Fig. 4 is displayed as an option.

An item "panel arrangement pattern" is a selection item for selecting the type of arrangement when construction material panels are arranged, and is selectable from, for example, grid-like arrangement (Grids) and block-like (staggered) arrangement (Brick).

An item "panel orientation" is a selection item for selecting an orientation in which construction material panels are arranged, and is selectable from, for example, horizontal basis arrangement (Horizontal) in which a construction material panel is long in a transverse direction (horizontal direction), vertical basis arrangement (Vertical) in which a construction material panel is long in a longitudinal direction (vertical direction), and arrangement (Square) in which a square construction material panel having no distinction between a transverse direction and a longitudinal direction is arranged.

An item "panel dimensions" is a selection item for selecting dimensions of the face panel module PM used as a reference (reference face panel module), and is selectable from, large, middle, small, and designate. Fig. 10B is a diagram illustrating examples of dimensions of a construction material panel (face panel module PM). As illustrated in Fig. 10B, large, middle, and small are preset dimensions. In a case of designate, the user may enter any dimensions, but the maximum dimensions or the minimum dimensions may be set in advance.

An item "joint dimensions" is an item for designating dimensions of a joint between two adjacent face panels P, and, for example, the user may enter any dimensions. The joint dimensions may be selectable from a plurality of dimensions set in advance.

An item "color selection" is a selection item for selecting the color of a construction material panel, and colors that are selectable in the type of construction material panel selected in the item "construction material selection" are displayed as options.

At least one of the items "construction material selection", "panel arrangement pattern", "panel orientation", "panel dimensions", "joint dimensions", and "color selection" illustrated in Fig. 10 may be selectable by the user, and items other than the selectable items may be set in advance. For example, at least the item "panel dimensions" may be selectable by the user, and the other items may be set in advance. Items other than the above-described items may be selectable.

The construction material selector 254 selects the type of construction material panel to be attached to a target surface. For example, the construction material selector 254 selects the type of construction material panel selected on the basis of the user's operation (for example, the type of construction material panel selected in the item "construction material selection" illustrated in Fig. 10) as the type of construction material panel to be attached to a target surface. The construction material selector 254 may present a construction material panel based on a reference defined in each country among a plurality of types of construction material panels, to the user as an option. The reference defined in each country is a reference for fire prevention performance or a strength defined in each country (refer to the reference data illustrated in Fig. 6). For example, the construction material selector 254 may display an option for a construction material panel based on a reference defined in each country among a plurality of types of construction material panels as the option in the item "construction material selection" illustrated in Fig. 10. The construction material selector 254 may select the type of construction material panel conforming to a reference defined in a country selected by the user among a plurality of types of construction material panels.

The weight information acquirer 255 acquires weight information regarding the weight per unit area of a construction material panel by referring to the construction material panel information stored in the construction material information storage 242. The weight of the construction material panel differs depending on fire prevention performance, a strength, or the like.

The weight calculator 257 calculates the weight of the construction material panel in a case where the construction material panel selected by the construction material selector 254 is to be attached to a target surface on the basis of the arrangement information generated by the arrangement information generator 256 and the weight information acquired by the weight information acquirer 255. For example, the weight calculator 257 calculates the weight of each construction material panel to be attached to a target surface or the total weight of each target surface. Since there is a case where construction material panels are attached to a plurality of 3D target surfaces, the weight calculator 257 may calculate the total weight of construction material panels to be attached over a plurality of target surfaces. The weight calculator 257 may calculate the total weight of construction material panels to be attached to all target surfaces of a building.

The arrangement information generator 256 generates arrangement information regarding the number, dimensions, and arrangement of construction materials to be arranged on a target surface according to a predetermined arrangement rule on the basis of data (2D data or 3D data) regarding the target surface acquired from the structure design information (3D data or the like) and information regarding the construction materials to be attached to the target surface. For example, the arrangement information generator 256 generates the arrangement information according to a predetermined arrangement rule with the type of construction material panel selected by the construction material selector 254 as a construction material panel to be arranged on a target surface. The predetermined arrangement rule is an arrangement rule stored in the arrangement rule storage 244, and indicates at least one rule in a case where there are a plurality of rules. For example, the predetermined arrangement rule is selected from among the arrangement rules described with reference to Figs. 7(A) to 7(I), Fig. 8, and Fig. 9. The arrangement information generator 256 generates arrangement information regarding the number, dimensions, and arrangement of construction material panels to be arranged on a target surface according to a predetermined arrangement rule (for example, an arrangement rule selected by the user) on the basis of at least designated dimensions of a construction material panel (dimensions of the face panel module PM used as a reference (reference face panel module)). This is not applied to a case where panel arrangement is determined in advance by a designer.

The arrangement information generator 256 may generate arrangement information in which a specific construction material (a construction material panel serving as an accessory) having specific shape and dimensions attached over a first target surface and a second target surface is arranged at a protruding corner and/or a recessed corner of the first target surface (for example, the target surface TS1 in Fig. 9) and the second target surface (for example, the target surface TS2 in Fig. 9) among a plurality of target surfaces is arranged. For example, when the arrangement rule described with reference to Fig. 9 is selected as the predetermined arrangement rule in this case, in a case where it is assumed that a face panel module ("B" portion) having a width dimensions shorter than that of a face panel module ("A" portion) used as a reference, arranged at the center of the first target surface is arranged at the end of the first target surface, and a face panel module ("C" portion) having a width dimensions shorter than that of a face panel module ("A" portion) used as a reference, arranged at the center of the second target surface adjacent to the first target surface is arranged at the end of the second target surface, a face panel module as a single component subjected to folding processing is arranged on a portion occupied by the two face panel modules (the "B" portion and the "C" portion) arranged on a portion where the first target surface and the second target surface intersect each other. For example, the arrangement information generator 256 determines dimensions of the specific construction material on the basis of dimensions of the face panel module PM used as a reference (reference face panel module), dimensions of the first target surface, and dimensions of the second target surface received by the receptioner 253, and also determines the shape of the specific construction material on the basis of an angle of the protruding corner and/or the recessed corner of the first target surface and the second target surface. The first target surface may be the target surface on which the face panel module PM is initially arranged, the surface having a main entrance of a building, the largest target surface, or the target surface designated by a customer described above.

The arrangement information generator 256 may generate arrangement information regarding the number, dimensions, and arrangement of construction material panels to be arranged on a target surface on the basis of the color, the finish, or the orientation of the construction material panel to be attached to the target surface or an arrangement pattern in addition to at least designated dimensions of a construction material panel (the face panel module PM used as a reference (dimensions of the reference face panel module)).

The arrangement information generator 256 stores the generated arrangement information into the arrangement information storage 245. In this case, the arrangement information generator 256 may also store attribute information in association with the arrangement information. The attribute information is, for example, information regarding the weight calculated by the weight calculator 257, and information regarding the color, the finish, or the cost of the construction material panel to be attached to the target surface.

The image generator 258 generates an image of a state in which the construction material panel is attached to the target surface on the basis of the arrangement information generated by the arrangement information generator 256. For example, the image generator 258 displays an image diagram or an image picture of a state in which the construction material panel is actually attached to the target surface on the basis of the arrangement information generated by the arrangement information generator 256 on the display 220. The image diagram or the image picture includes a diagram or a picture that visualizes a scene of a structure (a building or the like) in a state in which the construction material panel is actually attached to the target surface. The color or the finish of the construction material panel may also reproduce the selected color or finish.

The output 259 outputs the arrangement information generated by the arrangement information generator 256. As an output method, the arrangement information may be displayed on the display 220, may be stored in a file to be preserved in an HDD, and may be transmitted via the communicator 210. The output 259 may output the arrangement information generated by the arrangement information generator 256 in association with attribute information including at least information regarding the weight calculated by the weight calculator 257. The attribute information may include, for example, the type (the product name or the commercial product name) of construction material panel to be attached to the target surface, and information regarding the color, the finish, or cost of the construction material panel. The attribute information may include information regarding a place where a building is to be constructed, such as a location condition, a client, or a designer. The attribute information may include data regarding the target surface to which the construction material panel is to be attached, 3D data of a structure having the target surface, identification information for specifying each piece of data, or the like. The output 259 may output the image generated by the image generator 258 in association with the arrangement information.

### (Operation in construction material arrangement process)

Next, an operation in a construction material arrangement process of the construction material arrangement processing device 20 generating construction material panel arrangement information with respect to a target surface will be described.

### (First example of construction material arrangement process)

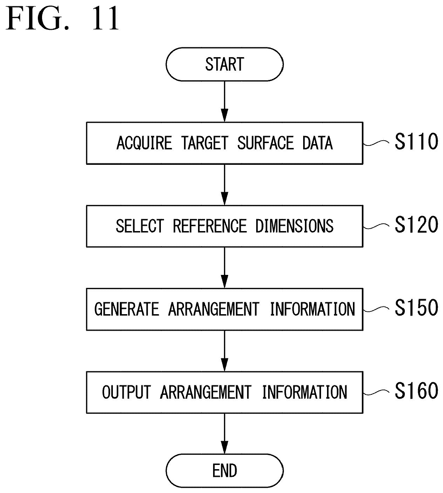

Fig. 11 is a flowchart illustrating a first example of the construction material arrangement process according to the present embodiment. The example of the construction material arrangement process illustrated in Fig. 11 is an example in which arrangement information is generated by selecting dimensions of a construction material panel (dimensions of the face panel module PM (reference face panel module)) to be arranged on a 2D target surface.

(Step S110) The target surface data acquirer 252 acquires 2D data regarding a target surface that is a target to which a construction material panel is to be attached from the target surface data storage 241. The flow proceeds to a process in step S120.

(Step S120) The receptioner 253 receives selected reference dimensions of the construction material panel on the basis of a user's operation on the input 230. The reference dimensions are, for example, dimensions of the face panel module PM used as a reference (reference face panel module) described with reference to Fig. 8. The user may select the dimensions from among dimension options set in advance, and may designate any dimensions. The flow proceeds to a process in step S150.

(Step S150) The arrangement information generator 256 generates arrangement information regarding the number, dimensions, and arrangement of construction materials to be arranged on a target surface according to an arrangement rule on the basis of the 2D data regarding the target surface and the reference dimensions (for example, dimensions selected in the item "panel selection" illustrated in Fig. 10) selected by the user (refer to Figs. 7 and 8). The flow proceeds to a process in step S160.

(Step S160) The output 259 outputs the arrangement information generated by the arrangement information generator 256.

In a case where construction material panel arrangement information with respect to a plurality of target surfaces is generated, the processes in steps S110, S120, S150, and S160 are repeatedly performed for each target surface. The process in step S160 may be performed for each target surface, and may be performed as a process of outputting arrangement information with respect to all target surfaces after the processes in steps S110, S120, and S150 are performed for all target surfaces.

### (Second example of construction material arrangement process)

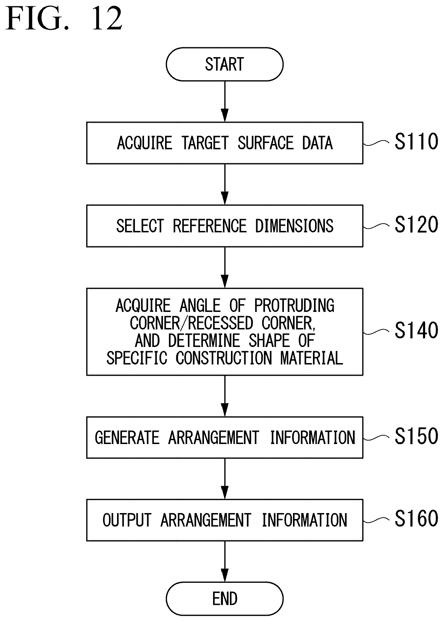

Fig. 12 is a flowchart illustrating a second example of the construction material arrangement process according to the present embodiment. The example of the construction material arrangement process illustrated in Fig. 12 is an example in which arrangement information is generated by selecting dimensions of a construction material panel (dimensions of the face panel module PM (reference face panel module)) to be arranged on a 3D target surface.

(Step S110) The target surface data acquirer 252 acquires 3D data regarding a target surface that is a target to which a construction material panel is to be attached from the target surface data storage 241. The flow proceeds to a process in step S120.

(Step S120) The receptioner 253 receives selected reference dimensions of the construction material panel on the basis of a user's operation on the input 230. The reference dimensions are, for example, dimensions of the face panel module PM used as a reference (reference face panel module) described with reference to Fig. 8. The user may select the dimensions from among dimension options set in advance, and may designate any dimensions. The flow proceeds to a process in step S140.

(Step S140) The arrangement information generator 256 acquires an angle of a protruding corner and/or a recessed corner, and determines a shape of a specific construction material (accessory) (a folding angle of an accessory or the like). The flow proceeds to a process in step S150.

(Step S150) The arrangement information generator 256 generates arrangement information regarding the number, dimensions, and arrangement of construction materials to be arranged on the target surface according to an arrangement rule on the basis of the 3D data regarding the target surface, the reference dimensions (for example, dimensions selected in the item "panel selection" illustrated in Fig. 10) selected by the user, and the angle of the protruding corner/recessed corner (refer to Figs. 7 and 9). The flow proceeds to a process in step S160.

(Step S160) The output 259 outputs the arrangement information generated by the arrangement information generator 256.

### (Third example of construction material arrangement process)

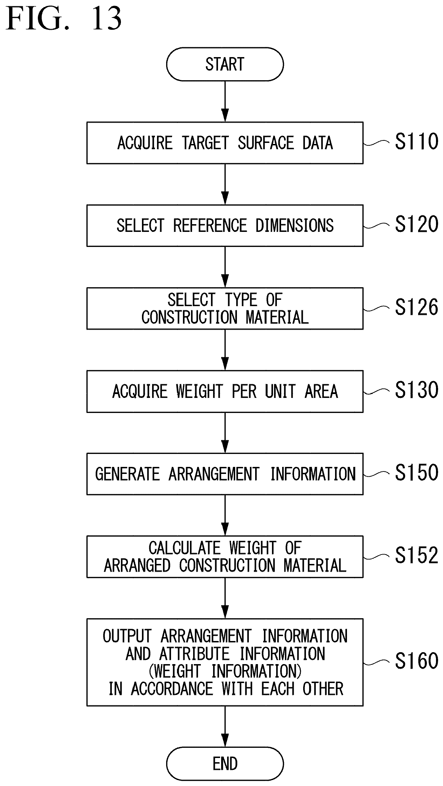

Fig. 13 is a flowchart illustrating a third example of the construction material arrangement process according to the present embodiment. The example of the construction material arrangement process illustrated in Fig. 13 is an example in which arrangement information is generated by selecting the type and dimensions of a construction material panel (dimensions of the face panel module PM (reference face panel module)) to be arranged on a 2D target surface, and weight information of the construction material panel to be arranged is added as attribute information.

(Step S110) The target surface data acquirer 252 acquires 2D data regarding a target surface that is a target to which a construction material panel is to be attached from the target surface data storage 241. The flow proceeds to a process in step S120.

(Step S120) The receptioner 253 receives the selected type and reference dimensions of the construction material panel on the basis of a user's operation on the input 230. The reference dimensions are, for example, dimensions of the face panel module PM used as a reference (reference face panel module) described with reference to Fig. 8. The user may select the dimensions from among dimension options set in advance, and may designate any dimensions. The flow proceeds to a process in step S126.

(Step S126) The construction material selector 254 selects the type of the construction material panel (for example, the type of construction material panel selected in the item "construction material selection" illustrated in Fig. 10) selected on the basis of the user's operation as the type of construction material panel to be attached to the target surface. The flow proceeds to a process in step S130.

(Step S130) The weight information acquirer 255 acquires weight information regarding the weight per unit area of the construction material panel selected by the construction material selector 254 by referring to the construction material panel information stored in the construction material information storage 242. The flow proceeds to a process in step S150.

(Step S150) The arrangement information generator 256 generates arrangement information regarding the number, dimensions, and arrangement of construction materials to be arranged on the target surface according to an arrangement rule on the basis of the 2D data regarding the target surface and the reference dimensions selected by the user (refer to Figs. 7 and 8). The flow proceeds to a process in step S152.

(Step S152) The weight calculator 257 calculates the weight of the construction material panel in a case where the construction material panel selected by the construction material selector 254 is to be attached to the target surface on the basis of the arrangement information generated by the arrangement information generator 256 and the weight information acquired by the weight information acquirer 255. The flow proceeds to a process in step S160.

(Step S160) The output 259 outputs the arrangement information generated by the arrangement information generator 256 in association with attribute information including the weight information calculated by the weight calculator 257.

The example of the construction material arrangement process illustrated in Fig. 13 is an example in which a construction material panel is arranged on a 2D target surface, but may also be applied to a case where a construction material panel is arranged on a 3D target surface. For example, in the construction material arrangement process illustrated in Fig. 13, 3D data regarding a target surface may be acquired in the process in step S110, an angle of a protruding corner and/or a recessed corner may be acquired by adding the process in step S140 in Fig. 12, and arrangement information regarding the number, dimensions, and arrangement of construction materials to be arranged on the target surface may be generated according to an arrangement rule on the basis of the 3D data regarding the target surface and the reference dimensions selected by the user in the process in step S150.

### (Fourth example of construction material arrangement process)

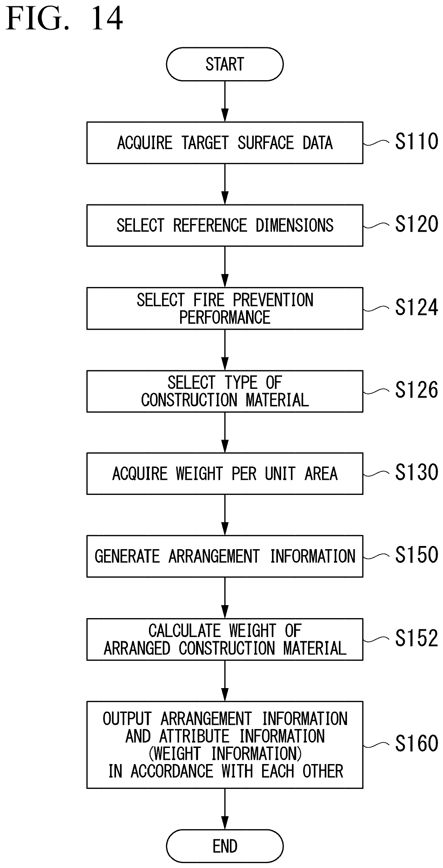

Fig. 14 is a flowchart illustrating a fourth example of the construction material arrangement process according to the present embodiment. The example of the construction material arrangement process illustrated in Fig. 14 is an example in which arrangement information is generated by selecting dimensions of a construction material panel (dimensions of the face panel module PM (reference face panel module)) to be arranged on a 2D target surface and fire prevention performance, and weight information of the construction material panel to be arranged is added as attribute information.

(Step S110) The target surface data acquirer 252 acquires 2D data regarding a target surface that is a target to which a construction material panel is to be attached from the target surface data storage 241. The flow proceeds to a process in step S120.

(Step S120) The receptioner 253 receives the selected type and reference dimensions of the construction material panel on the basis of a user's operation on the input 230. The reference dimensions are, for example, dimensions of the face panel module PM used as a reference (reference face panel module) described with reference to Fig. 8. The user may select the dimensions from among dimension options set in advance, and may designate any dimensions. The flow proceeds to a process in step S124.

(Step S124) The receptioner 253 receives selection for fire prevention performance (flame-retardant, quasi-nonflammable, nonflammable, or the like) of a building having the target surface on the basis of the user's operation on the input 230. The flow proceeds to a process in step S126.

(Step S126) The construction material selector 254 selects the type of construction material panel conforming to the fire prevention performance selected on the basis of the user's operation. Alternatively, the construction material selector 254 may narrow down options for the type of construction material panel conforming to the fire prevention performance selected on the basis of the user's operation and select the type of construction material panel selected by the user from among the options. The flow proceeds to a process in step S130.

(Step S130) The weight information acquirer 255 acquires weight information regarding the weight per unit area of the construction material panel selected by the construction material selector 254 by referring to the construction material panel information stored in the construction material information storage 242. The flow proceeds to a process in step S150.

(Step S150) The arrangement information generator 256 generates arrangement information regarding the number, dimensions, and arrangement of construction materials to be arranged on the target surface according to an arrangement rule on the basis of the 2D data regarding the target surface and the reference dimensions selected by the user (refer to Figs. 7 and 8). The flow proceeds to a process in step S152.

(Step S152) The weight calculator 257 calculates the weight of the construction material panel in a case where the construction material panel selected by the construction material selector 254 is to be attached to the target surface on the basis of the arrangement information generated by the arrangement information generator 256 and the weight information acquired by the weight information acquirer 255. The flow proceeds to a process in step S160.

(Step S160) The output 259 outputs the arrangement information generated by the arrangement information generator 256 in association with attribute information including the weight information calculated by the weight calculator 257.

The example of the construction material arrangement process illustrated in Fig. 14 is an example in which a construction material panel is arranged on a 2D target surface, but may also be applied to a case where a construction material panel is arranged on a 3D target surface. For example, in the construction material arrangement process illustrated in Fig. 14, 3D data regarding a target surface may be acquired in the process in step S110, an angle of a protruding corner and/or a recessed corner may be acquired by adding the process in step S140 in Fig. 12, and arrangement information regarding the number, dimensions, and arrangement of construction materials to be arranged on the target surface may be generated according to an arrangement rule on the basis of the 3D data regarding the target surface and the reference dimensions selected by the user in the process in step S150.

### (Fifth example of construction material arrangement process)

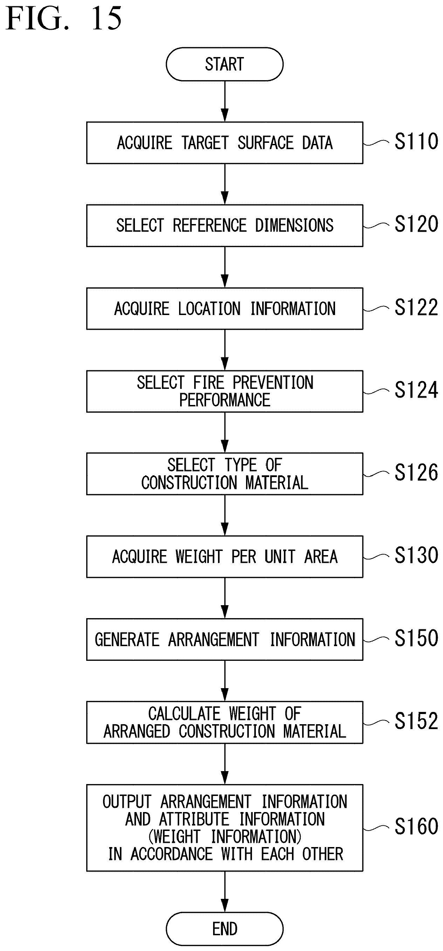

Fig. 15 is a flowchart illustrating a fifth example of the construction material arrangement process according to the present embodiment. The example of the construction material arrangement process illustrated in Fig. 15 is an example in which arrangement information is generated by selecting dimensions of a construction material panel (dimensions of the face panel module PM (reference face panel module)) to be arranged on a 2D target surface, a location condition, and fire prevention performance, and weight information of the construction material panel to be arranged is added as attribute information.

(Step S110) The target surface data acquirer 252 acquires 2D data regarding a target surface that is a target to which a construction material panel is to be attached from the target surface data storage 241. The flow proceeds to a process in step S120.

(Step S120) The receptioner 253 receives the selected type and reference dimensions of the construction material panel on the basis of a user's operation on the input 230. The reference dimensions are, for example, dimensions of the face panel module PM used as a reference (reference face panel module) described with reference to Fig. 8. The user may select the dimensions from among dimension options set in advance, and may designate any dimensions. The flow proceeds to a process in step S122.

(Step S122) The receptioner 253 receives selection for a location condition (a country, a prefecture, a state, a municipality, a specific area, or the like) of a building having the target surface on the basis of the user's operation on the input 230. The flow proceeds to a process in step S124.

(Step S124) The receptioner 253 receives selection for fire prevention performance (flame-retardant, quasi-nonflammable, nonflammable, or the like) of the building having the target surface on the basis of the user's operation on the input 230. The flow proceeds to a process in step S126.

(Step S126) The construction material selector 254 selects the type of construction material panel by using the location condition and the fire prevention performance selected on the basis of the user's operation. For example, the construction material selector 254 specifies fire prevention performance and strength-related

references (laws, and the like) on the basis of the selected location condition (a country, a prefecture, a state, a municipality, a specific area, or the like), and allows the user to select, as options, construction material panels excluding the types not conforming to the fire prevention performance based on the references. The flow proceeds to a process in step S130.

(Step S130) The weight information acquirer 255 acquires weight information regarding the weight per unit area of the construction material panel selected by the construction material selector 254 by referring to the construction material panel information stored in the construction material information storage 242. The flow proceeds to a process in step S150.

(Step S150) The arrangement information generator 256 generates arrangement information regarding the number, dimensions, and arrangement of construction materials to be arranged on the target surface according to an arrangement rule on the basis of the 2D data regarding the target surface and the reference dimensions selected by the user (refer to Figs. 7 and 8). The flow proceeds to a process in step S152.

(Step S152) The weight calculator 257 calculates the weight of the construction material panel in a case where the construction material panel selected by the construction material selector 254 is to be attached to the target surface on the basis of the arrangement information generated by the arrangement information generator 256 and the weight information acquired by the weight information acquirer 255. The flow proceeds to a process in step S160.

(Step S160) The output 259 outputs the arrangement information generated by the arrangement information generator 256 in association with attribute information including the weight information calculated by the weight calculator 257.

The example of the construction material arrangement process illustrated in Fig. 15 is an example in which a construction material panel is arranged on a 2D target surface, but may also be applied to a case where a construction material panel is arranged on a 3D target surface. For example, in the construction material arrangement process illustrated in Fig. 15, 3D data regarding a target surface may be acquired in the process in step S110, an angle of a protruding corner and/or a recessed corner may be acquired by adding the process in step S140 in Fig. 12, and arrangement information regarding the number, dimensions, and arrangement of construction materials to be arranged on the target surface may be generated according to an arrangement rule on the basis of the 3D data regarding the target surface and the reference dimensions selected by the user in the process in step S150.

### (Configuration of design and construction assistance device 30)

Next, a configuration of the design and construction assistance device 30 according to the present embodiment will be described in detail.

When arrangement of a construction material panel on a target surface is determined by the construction material arrangement processing device 20, the design and construction assistance device 30 receives the arrangement and generates a production drawing that is necessary for a processor in a subsequent stage to process the construction material panel. First, an outline of the production drawing will be described. The production drawing can be created when at least dimensions of the face panel P and a construction method are determined. The construction method indicates specifying an attachment structure when a construction material panel is attached to a target surface.

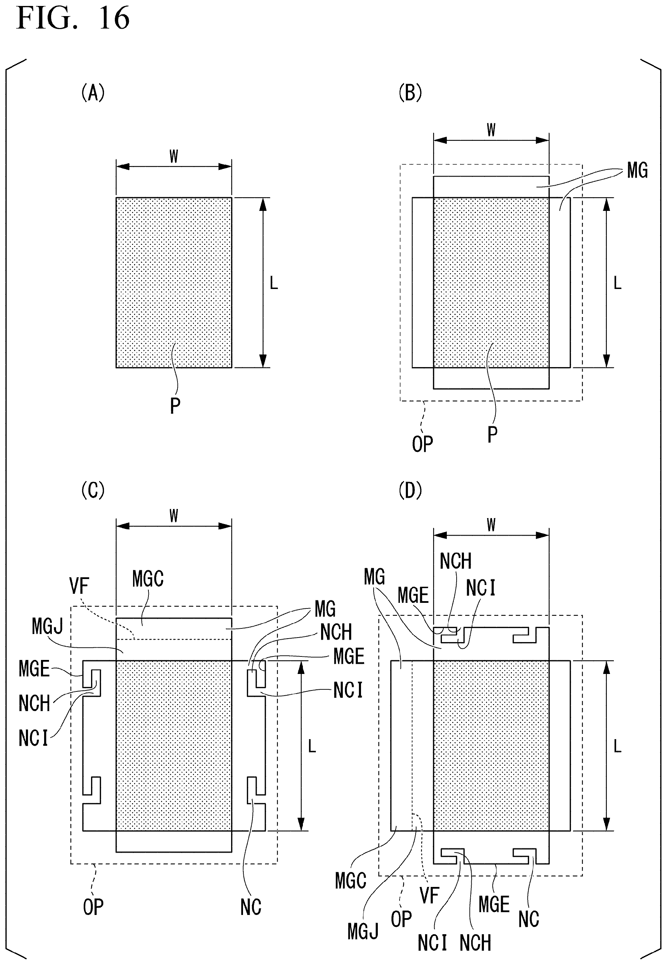

Fig. 16 is a diagram showing an outline of the production drawing according to the present embodiment. Fig. 16(A) illustrates the face panel P (a horizontal width W x a vertical width L) based on the arrangement information generated by the construction material arrangement processing device 20. The face panel P may be the face panel P used as a reference (reference face panel), and may be the face panel P used as an accessory.

Figs. 16(B), 16(C), and 16(D) illustrate examples of production drawings for processing the construction material panel in Fig. 16(A). The production drawings in Figs. 16(B), 16(C), and 16(D) are different production drawings due to different construction methods. Since an attachment structure differs depending on a construction method, the presence/absence, a shape, or dimensions of a fold margin MG on the outside of the face panel P, the presence/absence, a position, or the number of notch NC hooked to a support part of the target surface, and the presence/absence, a position, or the number of a joining hole (not illustrated) fastened via a joining member such as a screw differs. A region surrounded by a broken line OP indicates dimensions of an original plate (construction material before being cut).

In the example illustrated in Fig. 16(B), the face panel P has the plate-shaped fold margin MG extending from both ends (short sides) in the vertical direction and having a plate surface parallel to the surface direction of the face panel P. A horizontal dimensions of the fold margin MG provided on the short side is equivalent to the horizontal width W of the face panel P. The face panel P has a plate-shaped fold margin MG extending from both ends (long sides) in the horizontal direction and having a plate surface parallel to the surface direction of the face panel P. A vertical dimensions of the fold margin MG provided on the long side is equivalent to the vertical width L of the face panel P.

In the example illustrated in Fig. 16(B), in a case where the face panel P is joined to a target surface, the fold margins MG provided on the short sides and the long sides of the face panel P are cut at boundary with the face panel P. The fold margin MG is provided with joining holes penetrating through the fold margin MG at both ends of the plate surface. The face panel P is joined to the target surface via, for example, threads inserted into the joining holes and screwed to the target surface.

In the example illustrated in Fig. 16(C), the fold margins MG are provided on the short sides and the long sides of the face panel P in the same manner as in the example illustrated in Fig. 16(B). The notch NC is formed in the fold margin MG provided on the long side. The notches NC are formed on the upper side and the lower side of the left and right fold margins MG, and thus the total of four notches NC are formed. The notch NC has an introduction part NCI and a hook part NCH. The introduction part NCI is formed from an end part MGE of the fold margin MG that does not face the horizontal face panel P toward the face panel P along the horizontal direction. The hook part NCH is formed from the end of the introduction part NCI on the face panel P side toward the upper side along the vertical direction.

In the example illustrated in Fig. 16(C), in a case where the face panel P is joined to a target surface, the notch NC is hooked to a support part of the target surface. The fold margin MG provided on the upper short side of the face panel P is provided with a valley fold part VF. The valley fold part VF is provided in parallel to the horizontal direction and is folded when the face panel P is constructed. The fold margin MG provided on the upper short side of the face panel P has a joining part MGJ and a cover part MGC. The joining part MGJ is a part on the side of the face panel P from the valley fold part VF of the fold margin MG. The joining part MGJ is mountain-folded at the boundary with the face panel P and is joined to the target surface via a thread or the like. The cover part MGC is a part above the valley fold part VF of the fold margin MG. The joining part MGJ of the fold margin MG is mountain-folded at the boundary with the face panel P, and the valley fold part VF is provided, so that the cover part MGC has a plate surface parallel to the face panel P in a state in which the face panel P is constructed.

In the example illustrated in Fig. 16(C), the notch NC is hooked to the support part of the target surface, which achieves an effect of supporting a load of the face panel P. Since the fold margin MG has the valley fold part VF and the cover part MGC, a lower joining portion of an adjacent panel one above is covered by the cover part MGC, so that the aesthetic appearance is not impaired.

In the example illustrated in Fig. 16(D), the notch NC is formed in the fold margin MG provided on the short side compared with the example in Fig. 16 (C). The introduction part NCI is formed from an end part MGE of the fold margin MG that does not face the vertical face panel P toward the face panel P along the vertical direction. The hook part NCH is formed from the end of the introduction part NCI on the face panel P side toward the left side along the horizontal direction. The valley fold part VF, the joining part MGJ, and the cover part MGC are provided on the fold margin MG provided on the left long side. The valley fold part VF is provided in parallel to the vertical direction. The cover part MGC is a left part of the valley fold part VF of the fold margin MG.

A specific example of a production drawing in each construction method will be described later.

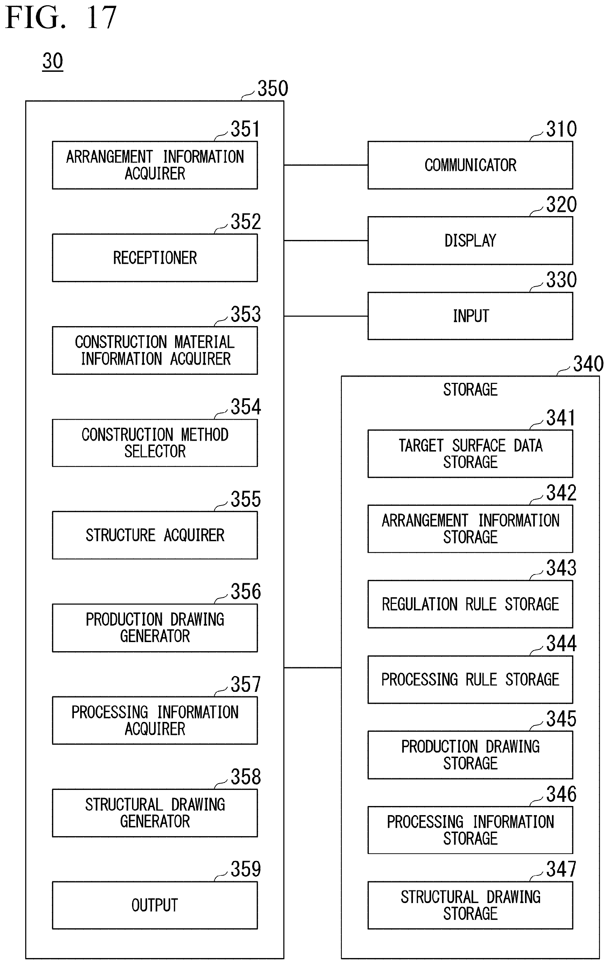

Fig. 17 is a block diagram illustrating an example of a configuration of the design and construction assistance device 30 according to the present embodiment. The design and construction assistance device 30 is configured to include a communicator 310, a display 320, an input 330, a storage 340, and a controller 350.

The communicator 310 is configured to include, for example, a plurality of Ethernet (registered trademark) ports, a plurality of digital input/output ports such as USBs, or wireless communication ports such as WIFI (registered trademark) or mobile phone lines, and performs communication with other devices or terminal via a communication network under the control of the controller 350.

The display 320 is a display that displays information such as an image or text, and is configured to include, for example, a liquid crystal display panel or an organic electroluminescence display panel.

The input 330 receives an operation of a user on a keyboard, a mouse, a touch pad, or the like. The input 330 may be configured as a touch panel integrally with the display 220. The input 330 may receive various instructions with voices that are input to a microphone or the like.

The storage 340 includes, for example, an HDD, an SSD, an EEPROM, a ROM, and a RAM, and stores various pieces of information, images, programs, and the like. The storage 340 is not limited to being built into the construction material arrangement processing device 20, and may be an external storage device connected thereto via a digital input/output port such as the USB.

For example, the storage 340 is configured to include a target surface data storage 341, an arrangement information storage 342, a regulation rule storage 343, a processing rule storage 344, a production drawing storage 345, a processing information storage 346, and a structural drawing storage 347.

The target surface data storage 341 stores data (2D data or 3D data) regarding a target surface to which a construction material panel is to be attached or identification information for specifying the data regarding the target surface. In a case where the identification information for specifying the data regarding the target surface is stored, the data regarding the target surface may be acquired from the 3D-CAD device 10 or the construction material arrangement processing device 20 by using the identification information.

The arrangement information storage 342 stores construction material panel arrangement information output by the construction material arrangement processing device 20. The arrangement information storage 342 may store some or all of pieces of attribute information associated with the arrangement information.

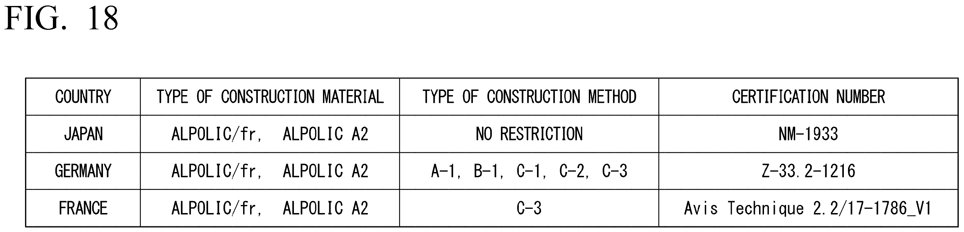

The regulation rule storage 343 stores information regarding a regulation rule applied when a production drawing for processing a construction material panel is generated. Fig. 18 is a diagram illustrating an example of information regarding a regulation rule stored in the regulation rule storage 343. For example, as information regarding a regulation rule in each country, a country name, the type of construction material, the type of construction method, and a certification number are stored in association with each other. The name of each country is stored in the country name. The type of construction material conforming to a regulation of each country is stored in the type of construction material. The type of construction material is, for example, the type of construction material panel specified from the product name (commercial product name) of the construction material panel information illustrated in Fig. 4. The type of construction method conforming to a regulation of each country is stored in the type of construction method. The type of construction method corresponds to the type of attachment structure when a construction material panel is to be attached to a target surface. The authorization number is a number assigned when it is certified that a construction material panel complies with a regulation.

The processing rule storage 344 stores an attachment structure and information regarding processing rules corresponding to the attachment structure for each construction method. The processing rules include information regarding locations, shapes, dimensions, and folding methods of the fold margins (mountain folding, valley folding), and positions of joining parts (for example, joining holes), and shapes or positions of notches exemplified in Figs. 16 (B), 16(C), and 16(D).

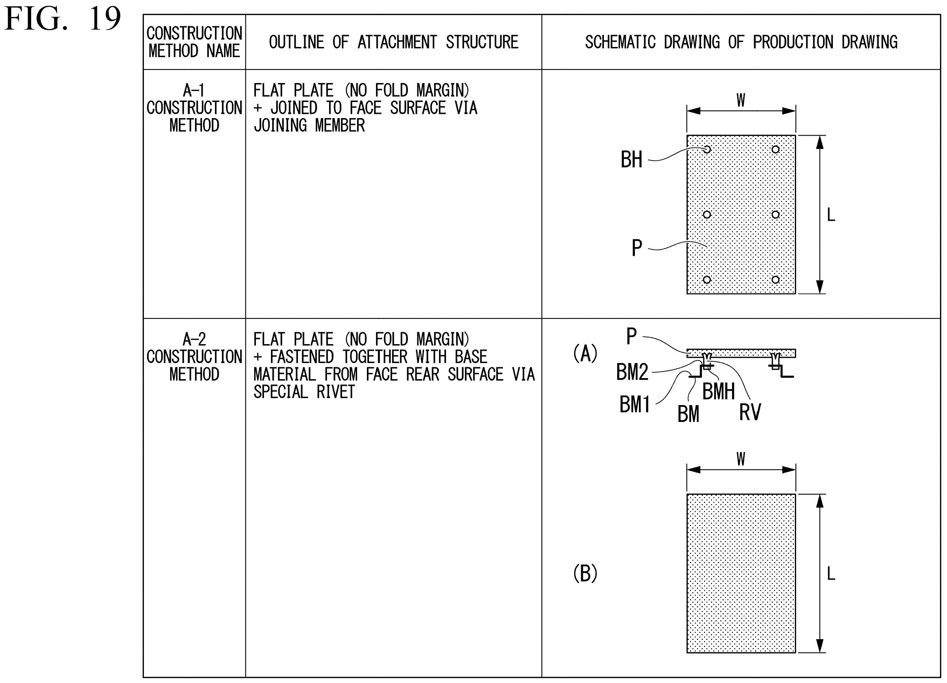

Herein, outlines of specific examples of processing rules according to ten types of construction methods will be described with reference to Figs. 19 to 23 illustrating more specific examples of the examples illustrated in Figs. 16(B), 16(C), and 16(D). Figs. 19 to 23 illustrate a construction method name (temporary name) of a construction method, an outline of an attachment structure, and a schematic drawing of a production drawing according to processing rules. For example, the construction method is roughly classified into three types of construction methods, and will be referred to as an "A construction method", a "B construction method", and a "C construction method" here. The A construction method is classified into two types of construction methods, and will be referred to as an "A-1 construction method" and an "A-2 construction method" here. The B construction method is classified into two types of construction methods, and will be referred to as a "B-1 construction method" and a "B-2 construction method" here. The B-1 construction method is further classified into two types of construction methods, and will be referred to as a "B-1-1 construction method" and a "B-1-2 construction method" here. The B-2 construction method is further classified into two types of construction methods, and will be referred to as a "B-2-1 construction method" and a "B-2-2 construction method" here. The C construction method is classified into three types of construction methods, and will be referred to as a "C-1 construction method", a "C-2 construction method" and a "C-3 construction method" here. The C-3 construction method is further classified into two types of construction methods, and will be referred to as a "C-3-1 construction method" and a "C-3-2 construction method" here.

Here, whether the type of attachment structure is the same or different for each construction method is determined on the basis of a criterion including the viewpoint of how much a difference affects realization of a function, the difference being a difference in the presence/absence, a shape, and a position of a fold margin, the presence/absence and position of a notch, and the presence/absence of a joining part (for example, a joining hole) in the production drawing, and a ratio of the short side to the long side (aspect ratio) of the face panel P. For example, whether the type of attachment structure is the same or different for each construction method is determined on the basis of a criterion including the viewpoint of how much the difference affects realization of a function of improving strength (improvement) by the presence or absence of reinforcement, a function of not impairing the aesthetic appearance (considering aesthetic appearance), or a function of improving durability by considering waterproofness. For example, the attachment structures and the processing rules in the respective ten types of construction methods are defined as different types because the functions realized in combinations of fold margins, notches, joining holes, and the like of a construction material panel according to the joining methods in the attachment structures are different.

Hereinafter, the processing rules in each of the ten types of construction methods (attachment structures) will be described in detail with reference to each drawing.

Fig. 19 is a diagram illustrating outlines of processing rules in the A-1 construction method and the A-2 construction method. The A-1 construction method and the A-2 construction method are construction methods in which a flat plate construction material panel (face panel P) having no fold margin is attached. The attachment structure in the A-1 construction method is a structure in which the flat plate face panel P is directly fastened to a face surface via a joining member on a base material on a target surface side. Examples of the joining member include screws, threads, rivets, bolts (including those combined with nuts), and nails. The joining member is connected to the base material on the target surface side through a joining hole BH that vertically penetrates through the plate surface of the face panel P. As the processing rules in the A-1 construction method, there is a rule in which the distance from the end of the face panel P to the joining hole BH (a fastening position of the joining member) is set to predetermined dimensions or more, and, as shown in the schematic drawing of the production drawing, a position and number of the joining holes BH are defined according to dimensions (dimensions of W and L) of the face panel P. In the example of the A-1 construction method illustrated in Fig. 19, six joining holes BH are formed. The joining holes BH form pairs on both ends in the horizontal direction of the face panel P, and three pairs are formed in the vertical direction. Depending on a material of the face panel P, the face panel P may be joined through adhesion or welding without using a joining member. From the viewpoint of cost saving, the face panel P may be joined through adhesion.

As illustrated in a side view of Fig. 19(A), the attachment structure in the A-2 construction method is a structure in which a rear surface side of the face panel P is joined and fastened together with a base material BM on the target surface side via a special rivet RV. In the A-1 construction method, the joining portion is seen on the front surface of the face panel P, but, in the A-2 construction method, since the face panel P is fixed from the rear surface side via the special rivet RV, the joining portion is not seen on the front surface of the face panel P, a function of not impairing the aesthetic appearance is realized.

Here, a structure and a function of the special rivet RV will be briefly described. As illustrated in Fig. 19(A), the base material BM is a Z-shaped plate material in a side view. The base material BM has a surface BM1 connected to the target surface side and a surface BM2 connected to the special rivet RV. The surface BM2 is provided with an engagement hole BMH into which the special rivet RV is inserted and with which the special rivet RV is engaged. A joining hole into which a tip of the special rivet RV is inserted is provided on the rear side of the face panel P, but the joining hole does not penetrate through the front side of the face panel P. When the tip of the special rivet RV is inserted into the joining hole, the tip cracks and expands, bites into the inside of the face panel P, and is fixed. Thus, in the A-2 construction method, the joining hole and the special rivet RV are not seen on the front side of the face panel P, and thus the aesthetic appearance of the face panel P can be maintained (refer to the front drawing of Fig. 19(B)). The special rivet RV is engaged with the base material BM, the tip of which is inserted into the rear side of the face panel P, to be joined to the face panel P. As the processing rules in the A-2 construction method, there is a rule in which the distance from the end of the face panel P to a fastening position of the special rivet RV is set to a predetermined dimensions or more, and, in the schematic drawing of the production drawing, a position and the number of joining holes (not illustrated) for fastening the special rivet RV are defined on the face rear surface side according to dimensions (dimensions of W and L) of the face panel P. For example, on the rear surface side of the face panel P in the schematic drawing of the production drawing illustrated in Fig. 19 (B), six joining holes into which the tips of the special rivets RV are defined at positions corresponding to the six joining holes BH in the A-1 construction method.

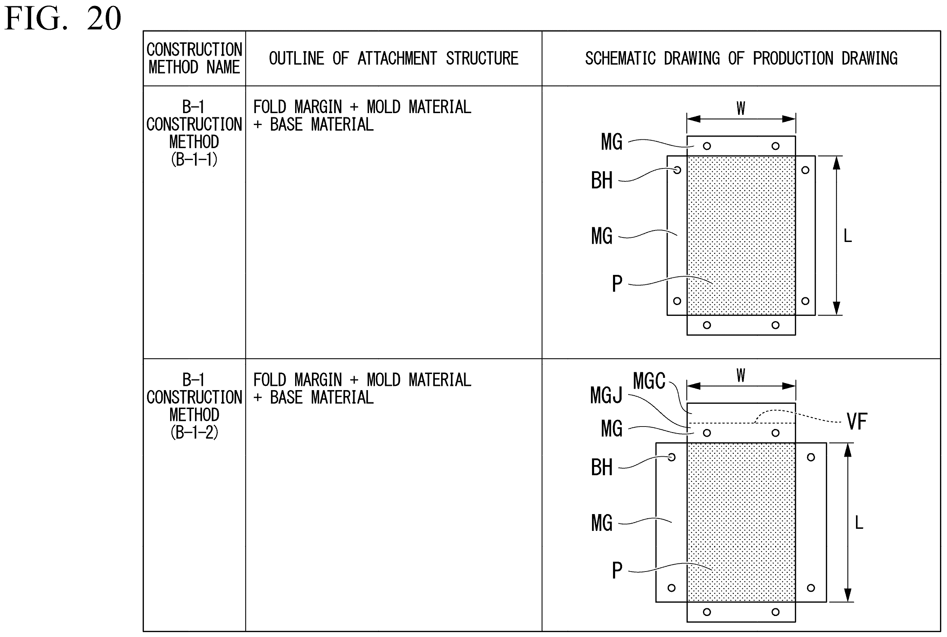

Fig. 20 is a diagram illustrating outlines of processing rules in the B-1 construction method (the B-1-1 construction method and the B-1-2 construction method). The B-1 construction method is a construction method in which the fold margin MG is provided on four sides of a construction material panel (face panel P), the face panel P provided with the fold margin MG is box-folded, then the adjacent fold margins MG are joined to each other together with an L-shaped mold material via a joining member such as a rivet to be reinforced, and then the mold material and a base material are joined via a joining member such as a rivet to be attached. In other words, in the B-1 construction method, a function of improving the strength using the reinforcement structure is realized compared with the A-1 construction method.

As the processing rules in the B-1 construction method, provision of the total of four fold margins MG including one pair on the short side and one pair on the long side of the face panel P, a fixed shape (rectangular shape) of the fold margin MG, and the like are defined. Dimensions of the fold margin MG are determined according to the dimensions (dimensions of W and L) of the face panel P, but the dimensions in the folding direction (depth direction) may be fixed, or may be variable depending on design. The joining hole BH is provided at a defined position of each of the four fold margins MG. In the B-1-1 construction method, a boundary portion between the face panel P and the fold margin MG is mountain-folded. The face panel P is joined to the target surface via a thread or the like that is inserted into the joining hole BH and screwed to the target surface. In the example illustrated in Fig. 20, the fold margin MG has a plate shape having a plate surface parallel to the surface direction of the face panel P. The fold margin MG extends from the short side and the long side of the face panel P. The horizontal dimension of the fold margin MG provided on the short side is equivalent to the horizontal width W of the find panel P. The vertical dimension of the fold margin MG provided on the long side is equivalent to the vertical width L of the face panel P. The fold margin MG provided on the short side is formed with joining holes BH penetrating through the fold margin MG on both ends of the plate surface in the horizontal direction. The fold margin MG provided on the long side is formed with joining holes BH penetrating through the fold margin MG on both ends of the plate surface in the vertical direction.

In the attachment structure in the B-1-2 construction method, compared with the attachment structure in the B-1-1 construction method, a joining portion between adjacent panels in the vertical direction is covered when the construction material panels are consecutively attached to an outer wall, and thus the function of not impairing the aesthetic appearance is realized. The attachment structure in the B-1-2 construction method is different from the B-1-1 construction method in that the fold margin MG has a valley fold part VF, a joining part MGJ, and a cover part MGC. In the example illustrated in Fig. 20, the valley fold part VF is provided in the fold margin MG provided on the upper short side of the face panel P. That is, in the B-1-2 construction method, in addition to the mountain fold at the boundary portion between the face panel P and the fold margin MG, the valley fold part VF is provided on one fold margin MG on the short side of the face panel P. For example, as illustrated in Fig. 20, the valley fold part VF is provided in parallel to the horizontal direction and is folded when the face panel P is constructed. The fold margin MG provided on the upper short side of the face panel P has a joining part MGJ and a cover part MGC. The joining part MGJ is a part on the side of the face panel P from the valley fold part VF of the fold margin MG. The joining part MGJ is mountain-folded at the boundary with the face panel P and is joined to the target surface via a thread or the like. The cover part MGC is a part above the valley fold part VF of the fold margin MG. The joining part MGJ of the fold margin MG is mountain-folded at the boundary with the face panel P, and the valley fold part VF is provided, so that the cover part MGC has a plate surface parallel to the face panel P in a state in which the face panel P is constructed. In the B-1-2 construction method, since the fold margin MG has the valley fold part VF, when construction material panels are consecutively attached to an outer wall, a lower joining portion of an adjacent panel one above can be covered by the cover part MGC, so that the aesthetic appearance is not impaired.

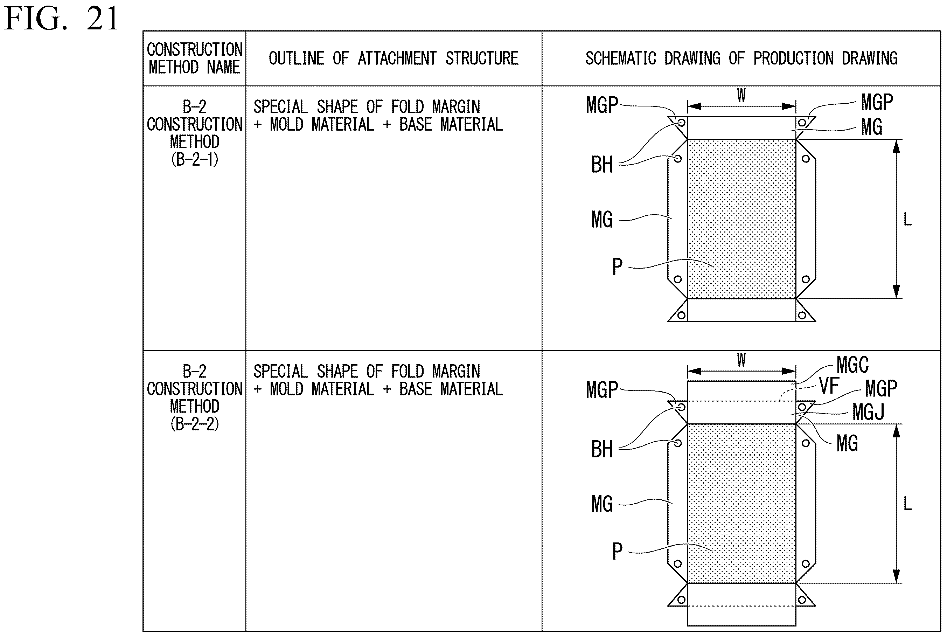

Fig. 21 is a diagram illustrating outlines of processing rules in the B-2 construction method (the B-2-1 construction method and the B-2-2 construction method). In the same manner as the B-1 construction method, the B-2 construction method is a construction method in which the fold margin MG is provided at a construction material panel (face panel P), the face panel P provided with the fold margin MG is box-folded, then the adjacent fold margins MG are joined to each other together with a square mold material via a joining member such as a rivet to be reinforced, and then the mold material and a base material are joined via a joining member such as a rivet to be attached, but a shape of the fold margin MG is a special shape. A fundamental attachment structure is the same as that in the B-1 construction method, but, since the shape of the fold margin MG is special, a joining member present in the vertical direction of the face panel P is seen, but there is an advantage in that a joining hole is not present in the horizontal direction. Thus, joining members at screw fastening portions in two of the four directions are not seen after construction.

As the processing rules in the B-2 construction method, provision of the total of four fold margins MG including one pair on the short side and one pair on the long side of the face panel P, a special shape (a trapezoidal shape, an inverted trapezoidal shape, a combination of the trapezoidal shape or the inverted trapezoidal shape and a rectangular shape) of the fold margin MG, and the like are defined. Dimensions of the fold margin MG are determined according to the dimensions (dimensions of W and L) of the face panel P, but the dimensions in the folding direction (depth direction) may be fixed, or may be variable depending on design. The joining hole BH is provided at a defined position of each of the four fold margins MG. In the B-2-1 construction method, as a folding method, a boundary portion between the face panel P and the fold margin MG is mountain-folded, and a trapezoidal protrusion part of the fold margin MG provided on the short side of the face panel P is mountain-folded. The fold margin MG provided on the short side is provided with a joining hole BH on the protrusion part. The latter mounting folding is mounting folding necessary to reinforce the fold margin MG provided on the adjacent long side with a mold material and a joining member. The face panel P is joined to the target surface via a thread or the like that is inserted into the joining hole BH and screwed to the target surface.

In the example illustrated in Fig. 21, the fold margin MG has a plate shape having a plate surface parallel to the surface direction of the face panel P. The fold margins MG provided on the short side and the long side have a trapezoidal shape in a front view. The fold margin MG provided on the short side has the shorter bottom side in contact with the face panel P in a front view. Dimensions of the shorter bottom side of the fold margin MG provided on the short side are equivalent to the horizontal width W of the face panel P. The fold margin MG provided on the short side has a protrusion part MGP on the side opposite to the face panel P with respect to the extension line of the long side of the face panel P. The joining hole BH that penetrates through the protrusion part MGP is formed in the protrusion part MGP. The longer bottom side of the fold margin MG provided on the long side is in contact with the face panel P in a front view. Dimensions of the longer bottom side of the fold margin MG provided on the long side are equivalent to the vertical width L of the face panel P. The fold margin MG provided on the long side has the joining holes BH penetrating through the fold margin MG on both end sides of the plate surface in the vertical direction.

In the B-2-1 construction method, a joint between the fold margin MG provided on the short side of the face panel P and the fold margin MG provided on the long side is not located at the corner of the face panel P. In the B-2-1 construction method, the joint between the fold margin MG on the short side of the face panel P and the fold margin MG on the long side thereof is located on the side surface of the face panel P. Thus, in the B-2-1 construction method, rainwater is less likely to enter from the joint between the fold margin MG on the short side and the fold margin MG on the long side of the face panel P. Therefore, in the B-2-1 construction method, waterproofness is taken into consideration, and thus the function of improving durability is realized.

As illustrated in Fig. 21, the B-2-2 construction method is different from the B-2-1 construction method in that the fold margin MG has a valley fold part VF, a joining part MGJ, and a cover part MGC. In the example illustrated in Fig. 21, the valley fold part VF is provided in the fold margin MG provided on the short side of the face panel P. That is, in the B-2-2 construction method, in addition to the mountain fold at the boundary portion between the face panel P and the fold margin MG, the valley fold part VF is provided on two fold margins MG on the short sides of the face panel P. The valley fold part VF is provided in parallel to the horizontal direction and is folded when the face panel P is constructed. The fold margin MG provided on the short side of the face panel P has a joining part MGJ and a cover part MGC. The joining part MGJ is a part on the side of the face panel P from the valley fold part VF of the fold margin MG. The joining part MGJ is mountain-folded at the boundary with the face panel P and is joined to the target surface via a thread or the like. The cover part MGC is a part on the side opposite to the face panel P with respect to the valley fold part VF of the fold margin MG. The joining part MGJ of the fold margin MG is mountain-folded at the boundary with the face panel P, and the valley fold part VF is provided, so that the cover part MGC has a plate surface parallel to the face panel P in a state in which the face panel P is constructed. In the B-2-2 construction method, since the fold margin MG has the valley fold part VF, when construction material panels are consecutively attached to an outer wall, a joining portion of the face panels P adjacent to each other can be covered by the cover part MGC, so that the function of not impairing the aesthetic appearance is realized.

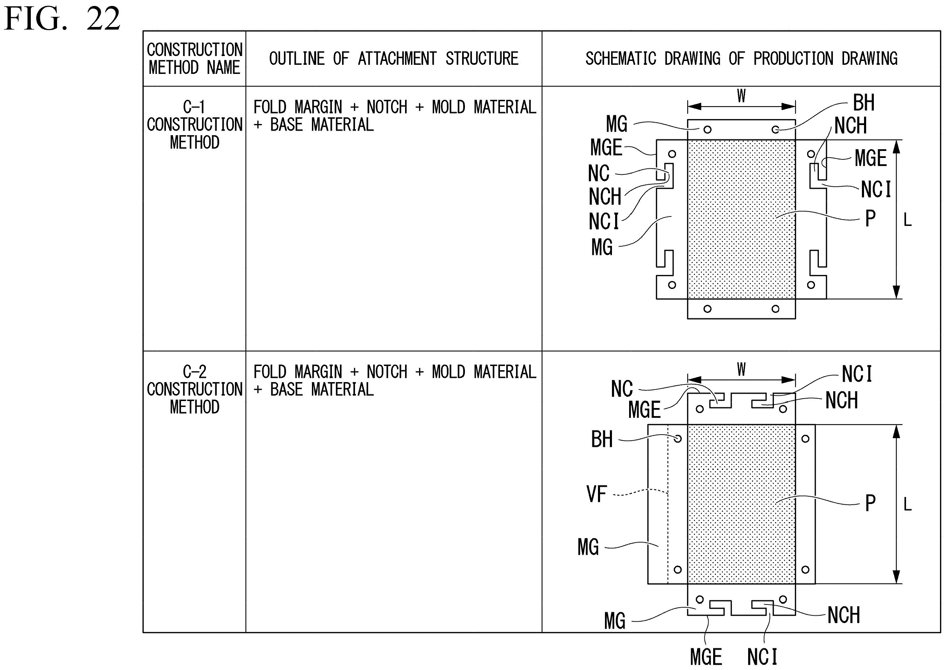

Fig. 22 is a diagram illustrating outlines of processing rules in the C-1 construction method and the C-2 construction method. In the C-1 construction method and the C-2 construction method are construction methods in which the fold margin MG is provided at a construction material panel (face panel P), the face panel P provided with the fold margin MG is box-folded, then the adjacent fold margins MG are joined to each other together with an L-shaped mold material via a joining member such as a rivet to be reinforced, and then the mold material and a base material are joined via a joining member such as a rivet to be attached, and the notch NC provided in the fold margin MG is hooked and attached to a support part of the base material. The notch NC has an effect of supporting a load of the construction material panel by being hooked to the support part of the base material, and thus the function of improving the strength is realized.

As the processing rules in the C-1 construction method and the C-2 construction method, provision of the total of four fold margins MG including one pair on the short side and one pair on the long side of the face panel P, a fixed shape (rectangular shape) of the fold margin MG, and the like are defined. Dimensions of the fold margin MG are determined according to the dimensions (dimensions of W and L) of the face panel P, but the dimensions in the folding direction (depth direction) may be fixed, or may be variable depending on design. The joining hole BH is provided at a defined position of each of the four fold margins MG. The notch NC is provided in each of a pair of fold margins MG on the long sides of the face panel P in the C-1 construction method, and is provided in each of a pair of fold margins MG on the short sides of the face panel P in the C-2 construction method. In the C-1 construction method, a boundary portion between the face panel P and the fold margin MG is mountain-folded. The face panel P is joined to the target surface via a thread or the like that is inserted into the joining hole BH and screwed to the target surface. The face panel P is attached by hooking the support part of the base material to the notch NC provided in the fold margin MG.

The example of the C-1 construction method illustrated in Fig. 22 is different from the example of the B-1-1 construction method illustrated in Fig. 21 in that the notch NC is formed in the fold margin MG provided on the long side. The notches NC are formed on the upper side and the lower side of the left and right fold margins MG, and thus the total of four notches NC are formed. The notch NC has an introduction part NCI and a hook part NCH. The introduction part NCI is formed from an end part MGE of the fold margin MG that does not face the horizontal face panel P toward the face panel P along the horizontal direction. The hook part NCH is formed from the end of the introduction part NCI on the face panel P side toward the upper side along the vertical direction.

The example of the C-2 construction method illustrated in Fig. 22 is different from the example of the C-1 construction method in that the notch NC is formed in the fold margin MG provided on the short side. The introduction part NCI is formed from an end part MGE of the fold margin MG that does not face the vertical face panel P toward the face panel P along the vertical direction. The hook part NCH is formed from the end of the introduction part NCI on the face panel P side toward the left side along the horizontal direction.

The C-2 construction method is different from the C-1 construction method in that, as illustrated in Fig. 22, the fold margin MG has a valley fold part VF, a joining part MGJ, and a cover part MGC. In the example illustrated in Fig. 22, the valley fold part VF is provided in the fold margin MG provided on the left long side of the face panel P. That is, in the C-2 construction method, in addition to the mountain fold at the boundary portion between the face panel P and the fold margin MG, the valley fold part VF is provided on one fold margin MG on the long side of the face panel P. The valley fold part VF is provided in parallel to the vertical direction and is folded when the face panel P is constructed. The fold margin MG provided on the left long side of the face panel P has a joining part MGJ and a cover part MGC. The joining part MGJ is a part on the side of the face panel P from the valley fold part VF of the fold margin MG. The joining part MGJ is mountain-folded at the boundary with the face panel P and is joined to the target surface via a thread or the like. The cover part MGC is a part on the left side of the valley fold part VF of the fold margin MG. The joining part MGJ of the fold margin MG is mountain-folded at the boundary with the face panel P, and the valley fold part VF is provided, so that the cover part MGC has a plate surface parallel to the face panel P in a state in which the face panel P is constructed. In the C-2 construction method, since the fold margin MG has the valley fold part VF, when construction material panels are consecutively attached to an outer wall, a lower joining portion of an adjacent panel one above can be covered by the cover part MGC, so that the aesthetic appearance is not impaired.

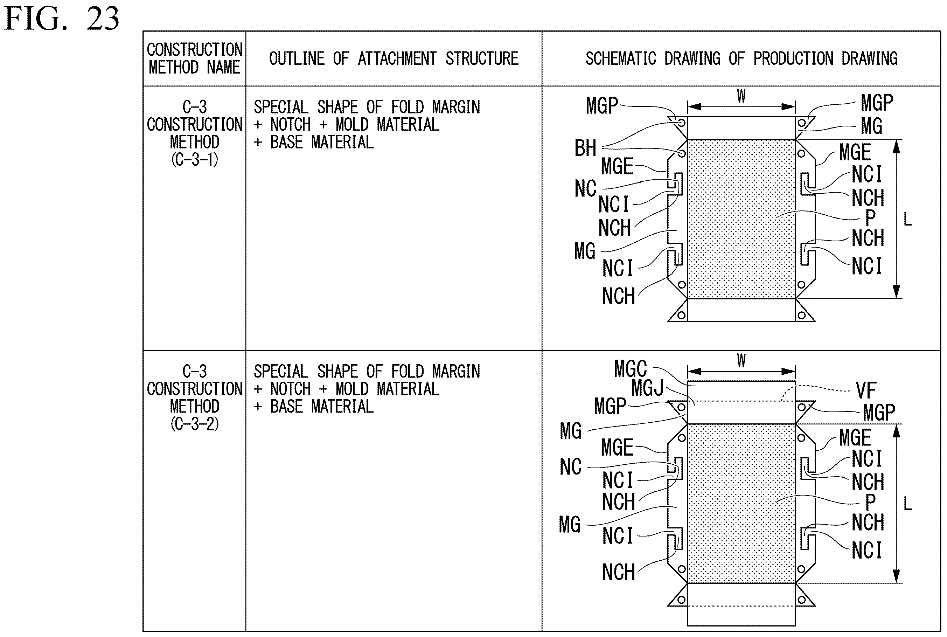

Fig. 23 is a diagram illustrating outlines of processing rules in the C-3 construction method (the C-3-1 construction method and the C-3-2 construction method). In the same manner as the C-1 construction method and the C-2 construction method, the C-3 construction method is a construction method in which the fold margin MG is provided at a construction material panel (face panel P), the face panel P provided with the fold margin MG is box-folded, then the adjacent fold margins MG are joined to each other together with a square mold material via a joining member such as a rivet to be reinforced, and then the mold material and a base material are joined via a joining member such as a rivet to be attached, and the notch NC provided in the fold margin MG is hooked and attached to a support part of the base material, but a shape of the fold margin MG is a special shape. A fundamental attachment structure is the same as that in the C-1 construction method and the C-2 construction method, but, since the shape of the fold margin MG is special, there is an advantage in that joining members at joining locations in two directions among four directions are not seen after processing.

As the processing rules in the C-3 construction method, provision of the total of four fold margins MG including one pair on the short side and one pair on the long side of the face panel P, a special shape (a trapezoidal shape, an inverted trapezoidal shape, a combination of the trapezoidal shape or the inverted trapezoidal shape and a rectangular shape) of the fold margin MG, and the like are defined. Dimensions of the fold margin MG are determined according to the dimensions (dimensions of W and L) of the face panel P, but the dimensions in the folding direction (depth direction) may be fixed, or may be variable depending on design. The joining hole BH is provided at a defined position of each of the four fold margins MG. The notch NC is provided in a pair of fold margins MG on the long sides of the face panel P. A folding method is the same as in a case of the B-2 construction method. The face panel P is joined to the target surface via a thread or the like that is inserted into the joining hole BH and screwed to the target surface.

The example of the C-3-1 construction method illustrated in Fig. 23 is different from the example of the B-1-1 construction method illustrated in Fig. 21 in that the notch NC is formed in the fold margin MG provided on the long side. The notches NC are formed on the upper side and the lower side of the left and right fold margins MG, and thus the total of four notches NC are formed. The notch NC has an introduction part NCI and a hook part NCH. The introduction part NCI is formed from an end part MGE of the fold margin MG that does not face the horizontal face panel P toward the face panel P along the horizontal direction. The upper hook part NCH of each of the left and right fold margins MG is formed from the end of the introduction part NCI on the face panel P side toward the upper side along the vertical direction. The lower hook part NCH of each of the left and right fold margins MG is formed from the end of the introduction part NCI on the face panel P side toward the lower side along the vertical direction. In the C-3-1 construction method, the notch NC has an effect of supporting a load of the construction material panel by being hooked to the support part of the base material, and thus the strength is improved more than in the B-2-1 construction method.

The example of the C-3-2 construction method illustrated in Fig. 23 is different from the C-3-1 construction method in that the fold margin MG has a valley fold part VF, a joining part MGJ, and a cover part MGC. In the example illustrated in Fig. 23, the valley fold part VF is provided in the fold margin MG provided on the short side of the face panel P. The valley fold part VF is provided in parallel to the horizontal direction and is folded when the face panel P is constructed. The fold margin MG provided on the short side of the face panel P has a joining part MGJ and a cover part MGC. The joining part MGJ is a part on the side of the face panel P from the valley fold part VF of the fold margin MG. The joining part MGJ is mountain-folded at the boundary with the face panel P and is joined to the target surface via a thread or the like. The cover part MGC is a part on the side opposite to the face panel P with respect to the valley fold part VF of the fold margin MG. The joining part MGJ of the fold margin MG is mountain-folded at the boundary with the face panel P, and the valley fold part VF is provided, so that the cover part MGC has a plate surface parallel to the face panel P in a state in which the face panel P is constructed. In the B-2-2 construction method, since the fold margin MG has the valley fold part VF, when construction material panels are consecutively attached to an outer wall, a joining portion of the face panels P adjacent to each other can be covered by the cover part MGC, so that the function of not impairing the aesthetic appearance is realized.

The specific examples of the processing rules according to the ten types of construction methods described with reference to Figs. 19 to 23 are only examples, and the present invention is not limited thereto. For example, attachment structures of the same type include a similar structure. The similar structure refers to a structure in which, for example, even if a shape, a position, or the number of a fold margin in processing slightly differs, a function realized by the fold margin is substantially the same. This also applies to a notch and a joining hole. The face panel P is included in the similar structure as long as a function to be realized is the same even if aspect ratios are reversed. For example, in the schematic drawing of the production drawing in the C-1 construction method illustrated in Fig. 22, the notch NC is present on the long side of the face panel P, but a structure in which the notch NC is present on the short side is also the similar structure and is thus the same type of attachment structure in terms of standard in the present embodiment.

The notch NC has an effect of supporting a load of the construction material panel by being hooked to the support part of the base material. As the number of joining members for joining is increased, there is an effect of preventing shaking by increasing the fixing strength, and resistance to wind pressure and the like is improved. The fixing strength can be further increased by using the joining member for joining and the notch NC together. In a case where a dimension of a construction material panel is large, it is preferable to increase the number of notches NC. Alternatively, the number of notches NC can be optimally designed through strength calculation. Since the thickness of a construction material panel also affects the result of the strength calculation, the optimum number of notches NC changes.

Referring to Fig. 17 again, the production drawing storage 345 stores the generated production drawing. The production drawing is a production drawing for processing a construction material panel, and is generated by the construction material arrangement processing device 20 according to processing rules.

The processing information storage 346 stores information regarding a processing procedure when a construction material panel is actually processed on the basis of the production drawing. The information regarding the processing procedure may be information showing the processing procedure by using text and a still image, and may be information showing the processing procedure by using a moving image. For example, the processing information storage 346 stores each construction method in association with the information regarding the processing procedure when processing is performed by using the construction method.

The structural drawing storage 347 stores a 3D construction drawing including at least an attachment structural drawing when a construction material panel for which a production drawing is generated has been processed and attached to a target surface. The production drawing stored in the production drawing storage 345 and the 3D construction drawing including at least the attachment structural drawing stored in the structural drawing storage 347 are associated with each other to be able to specify a correspondence relationship.

The controller 350 is configured to include an arrangement information acquirer 351, a receptioner 352, a construction material information acquirer 353, a construction method selector 354, a structure acquirer 355, a production drawing generator 356, a processing information acquirer 357, a structural drawing generator 358, and an output 359.

The arrangement information acquirer 351 acquires arrangement information for construction material panels output by the construction material arrangement processing device 20, and stores the acquired arrangement information into the arrangement information storage 342. The arrangement information acquirer 351 may acquire some or all pieces of attribute information associated with the arrangement information for construction material panels output by the construction material arrangement processing device 20, and stores the acquired some or all pieces of attribute information into the arrangement information storage 342 in association with the arrangement information.

The receptioner 352 receives various pieces of input information that are input from a user via the input 330. For example, the receptioner 352 receives information regarding dimensions of a construction material panel (dimensions of the face panel P) to be attached to a target surface on the basis of the user's operation on the input 330. The receptioner 352 receives information (for example, construction method information) for specifying an attachment structure for attaching the construction material panel to the target surface on the basis of the user's operation on the input 330.

The construction material information acquirer 353 acquires information including at least dimension data indicating the dimensions (the dimensions of the face panel P) of the construction material panel to be attached to the target surface on the basis of information regarding the dimensions of the construction material panel (the dimensions of the face panel P) that is received by the receptioner 352 on the basis of the user's operation on the input 330. The construction material information acquirer 353 may acquire the information including at least the dimension data indicating the dimensions of the construction material panel (the dimensions of the face panel P) to be attached to the target surface by referring to the arrangement information stored in the arrangement information storage 342. The construction material information acquirer 353 may acquire various pieces of information such as information regarding the number or arrangement (an arrangement pattern, orientation, or the like) of construction material panels to be arranged on the target surface, information regarding the weight of the construction material panel, and information regarding the color, the finish, or the cost of the construction material panel as necessary from the arrangement information and the attribute information stored in the arrangement information storage 342.

The construction method selector 354 selects a construction method when the construction material panel is attached to the target surface.

For example, the construction method selector 354 selects a construction method that is received by the receptioner 352 on the basis of the user's operation. The construction method selector 354 may refer to the information regarding the regulation rule stored in the regulation rule storage 343, present a construction method conforming to a regulation rule in each country as an option to the user, and select a construction method selected by the user from among options. The construction method selector 354 may select a construction method conforming to a regulation rule in each country by referring to the information regarding a regulation rule stored in the regulation rule storage 343.

The structure acquirer 355 acquires information indicating the type of attachment structure for a construction material panel that is a target for which a production drawing for processing is generated. For example, the structure acquirer 355 acquires information indicating the type of attachment structure in the construction method selected by the construction method selector 354 among a plurality of types of attachment structures. The structure acquirer 355 may acquire information indicating the type of attachment structure in the construction method selected by the construction method selector 354 among the plurality of types of attachment structures on the basis of applicable regulations.

The production drawing generator 356 generates a production drawing (2D production drawing) for processing the construction material panel on the basis of the information indicating the dimensions of the construction material panel (the dimensions of the face panel P) to be attached to the target surface acquired by the construction material information acquirer 353, the information indicating the type of attachment structure acquired by the structure acquirer 355, and the processing rules set for each type of attachment structure stored in the processing rule storage 344. For example, the production drawing generator 356 generates the production drawing further on the basis of applicable regulations when generating the production drawing for processing the construction material panel. The production drawing generator 356 stores the generated production drawing into the production drawing storage 345.

The processing information acquirer 357 acquires, from the processing information storage 346, information indicating a processing procedure when a construction material is to be processed on the basis of the production drawing generated by the production drawing generator 356. For example, in a case where the receptioner 352 receives a display request for information indicating a processing procedure on the basis of the user's operation, information indicating a processing procedure corresponding to a construction method is acquired.

The structural drawing generator 358 generates an attachment structural drawing on the basis of the dimension data indicating the dimensions of the construction material panel (the dimensions of the face panel P) to be attached to the target surface, the information indicating the type of attachment structure of the construction material panel, and the processing rules set for each type of attachment structure. For example, the structural drawing generator 358 generates a 3D construction drawing including at least the attachment structural drawing. The structural drawing generator 358 may generate a 3D construction drawing in which information regarding a heat insulating material is added to the attachment structural drawing. The structural drawing generator 358 stores the 3D construction drawing including at least the generated attachment structural drawing into the structural drawing storage 347.

The output 359 outputs the production drawing generated by the production drawing generator 356. As an output method, the production drawing may be displayed on the display 320, may be stored in a file to be preserved in the storage 340 (HDD), and may be transmitted via the communicator 310. The output 359 may further output the information indicating the processing procedure when the construction material panel is processed according to the production drawing on the basis of the production drawing generated by the production drawing generator 356. The output 359 may output the production drawing generated by the production drawing generator 356 and the 3D construction drawing including at least the attachment structural drawing generated by the structural drawing generator 358 in association with each other.

### (Operation in production drawing generation process)

Next, an operation in a production drawing generation process of the design and construction assistance device 30 generating a production drawing for processing a construction material panel will be described.

### (First example of production drawing generation process)

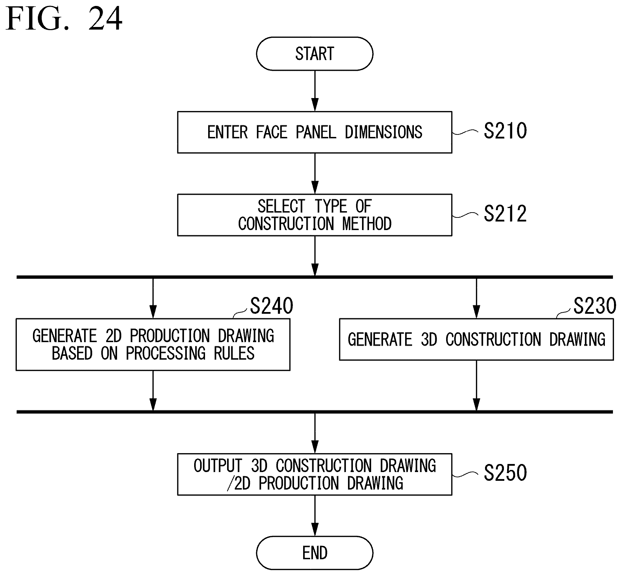

Fig. 24 is a flowchart illustrating a first example of the production drawing generation process according to the present embodiment.

(Step S210) The receptioner 352 receives information regarding dimensions of a construction material panel (dimensions of the face panel P) to be attached to a target surface on the basis of a user's operation on the input 330. The dimensions of the face panel P is entered to the input 330 by the user on the basis of the arrangement information acquired from the construction material arrangement processing device 20. The construction material information acquirer 353 acquires dimension data indicating the dimensions of the construction material panel (the dimensions of the face panel P) received by the receptioner 352. The construction material information acquirer 353 may automatically acquire the dimension data indicating the dimensions of the construction material panel (the dimensions of the face panel P) included in the arrangement information acquired from the construction material arrangement processing device 20 by referring to the arrangement information stored in the arrangement information storage 342. The flow proceeds to a process in step S212.

(Step S212) The receptioner 352 receives the type of construction method (that is, information for specifying an attachment structure for attaching the construction material panel to the target surface) that is selected on the basis of the user's operation on the input 330. The construction method selector 354 selects the type of construction method received by the receptioner 352 on the basis of the user's operation. The structure acquirer 355 acquires information indicating the type of attachment structure corresponding to the type of construction method selected by the construction method selector 354 from among a plurality of types of attachment structures. The flow proceeds to processes in step S230 and step S240.

(Step S230) The structural drawing generator 358 generates a 3D construction drawing including at least an attachment structural drawing on the basis of the dimensions of the construction material panel (the dimensions of the face panel P) acquired in step S210, the type of attachment structure for the construction material panel selected in step S212, and the processing rules stored in the processing rule storage 344. The flow proceeds to a process in step S250.

(Step S240) The production drawing generator 356 generates a production drawing (2D production drawing) for processing the construction material panel on the basis of the dimensions of the construction material panel (the dimensions of the face panel P) acquired in step S210, the type of attachment structure for the construction material panel selected in step S212, and the processing rules stored in the processing rule storage 344. The flow proceeds to the process in step S250.

(Step S250) the output 359 outputs the production drawing generated by the production drawing generator 356 and the 3D construction drawing generated by the structural drawing generator 358 in association with each other.

### (Second example of production drawing generation process)

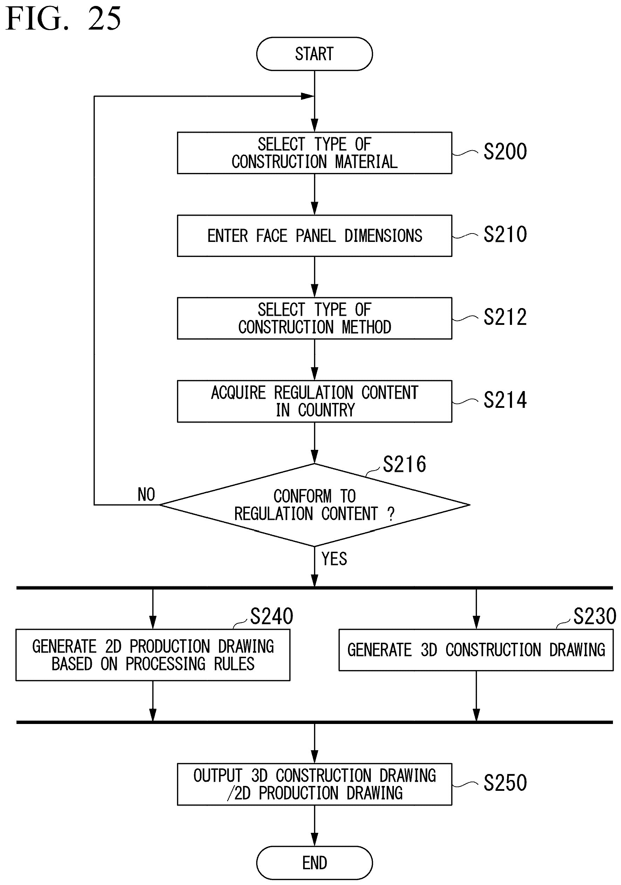

Fig. 25 is a flowchart illustrating a second example of the production drawing generation process according to the present embodiment. The production drawing generation process illustrated in Fig. 25 is an example of a process of generating a production drawing after it is determined that a selected construction method conforms to a regulation rule in a country.

(Step S200) The receptioner 352 receives information regarding the type of construction material panel to be attached to a target surface on the basis of a user's operation on the input 330. The type of construction material panel is defined by the type of construction material panel (or, for example, the product name or the commercial product name) selected by the construction material arrangement processing device 20, and specifies a material of the construction material panel. For example, the user selects the type of construction material panel (or, for example, the product name or the commercial product name) from among options, and thus the receptioner 352 receives information regarding the type of construction material panel to be attached to the target surface. The construction material information acquirer 353 acquires the information regarding the type of construction material panel received by the receptioner 352.

The construction material information acquirer 353 may automatically acquire information regarding the type of construction material panel (for example, the product name or the commercial product name) included in the attribute information acquired from the construction material arrangement processing device 20 by referring to the arrangement information and the attribute information stored in the arrangement information storage 342. The flow proceeds to a process in step S210.

(Step S210) The receptioner 352 receives information regarding dimensions of the construction material panel (dimensions of the face panel P) to be attached to the target surface on the basis of the user's operation on the input 330. The dimensions of the face panel P are entered to the input 330 by the user on the basis of the arrangement information acquired from the construction material arrangement processing device 20. The construction material information acquirer 353 acquires dimension data indicating the dimensions of the construction material panel (the dimensions of the face panel P) received by the receptioner 352. The construction material information acquirer 353 may automatically acquire the dimension data indicating the dimensions of the construction material panel (the dimensions of the face panel P) included in the arrangement information acquired from the construction material arrangement processing device 20 by referring to the arrangement information stored in the arrangement information storage 342. The flow proceeds to a process in step S212.

(Step S212) The receptioner 352 receives the type of construction method (that is, information for specifying an attachment structure for attaching the construction material panel to the target surface) that is selected on the basis of the user's operation on the input 330. An option for the type of construction method that is selectable by the user in this case may be restricted on the basis of the type of construction material panel selected in step S210. For example, in a case where there is a construction method not conforming to a material of the type of the selected construction material panel, options other than the construction method not conforming may be present to the user. The construction method selector 354 selects the type of construction method received by the receptioner 352 on the basis of the user's operation. The flow proceeds to a process in step S214.

(Step S214) The construction method selector 354 acquires a regulation content in each country by referring to the regulation rules stored in the regulation rule storage 343. The flow proceeds to a process in step S216.

(Step S216) The construction method selector 354 determines whether or not the type of construction method selected in step S212 conforms to the regulation content in a country in which construction is to be performed among the regulation contents in the respective countries acquired in step S214. In a case where disconformity is determined (NO), the flow returns to the process in step S200. Alternatively, the flow may return to process in step S212. In a case where there is no option conforming to the regulation content, the construction method selector 354 may display an error on the display 320. On the other hand, in a case where conformity is determined (YES), the structure acquirer 355 acquires information indicating the type of attachment structure corresponding to the type of construction method selected by the construction method selector 354. The flow proceeds to processes in step S230 and step S240.

The design and construction assistance device 30 generates and outputs a 3D construction drawing and a 2D production drawing through the subsequent processes in steps S230, S240, and S250. The processes in steps S230, S240, and S250 are the same as the processes illustrated in Fig. 24, and thus a description thereof will not be repeated.

### (Third example of production drawing generation process)

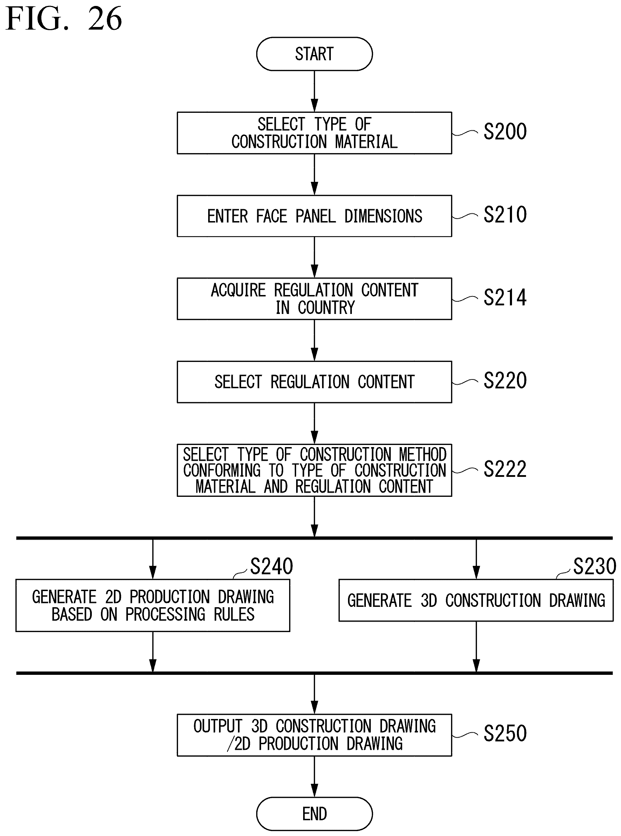

Fig. 26 is a flowchart illustrating a third example of the production drawing generation process according to the present embodiment. The production drawing generation process illustrated in Fig. 26 is an example of a process of automatically selecting a construction method conforming to a regulation rule in a country and generating a production drawing.

(Step S200) The construction material information acquirer 353 acquires information regarding the type of construction material panel received by the receptioner 352 in the same manner as the process in step S200 in Fig. 25. The construction material information acquirer 353 may automatically acquire information regarding the type of construction material panel (for example, the product name or the commercial product name) included in the attribute information acquired from the construction material arrangement processing device 20 by referring to the arrangement information and the attribute information stored in the arrangement information storage 342. The flow proceeds to a process in step S210.

(Step S210) The construction material information acquirer 353 acquires dimension data indicating dimensions of the construction material panel (dimensions of the face panel P) received by the receptioner 352 in the same manner as the process in step S210 in Fig. 25. The construction material information acquirer 353 may automatically acquire the dimension data indicating the dimensions of the construction material panel (the dimensions of the face panel P) included in the arrangement information acquired from the construction material arrangement processing device 20 by referring to the arrangement information stored in the arrangement information storage 342. The flow proceeds to a process in step S214.

(Step S214) The construction method selector 354 acquires a regulation content in each country by referring to the regulation rules stored in the regulation rule storage 343. The flow proceeds to a process in step S220.

(Step S220) The construction method selector 354 selects a regulation content in a country in which construction is to be performed among the regulation contents in the respective countries acquired in step S214. The construction method selector 354 may select the regulation content on the basis of the user's operation, and may select the regulation content on the basis of the attribute information associated with the arrangement information. The flow proceeds to a process in step S222.

(Step S222) The construction method selector 354 selects the type of construction method conforming to the type of construction material panel acquired in step S200 and the regulation content selected in step S220. The structure acquirer 355 acquires information indicating the type of attachment structure corresponding to the type of construction method selected by the construction method selector 354. The flow proceeds to processes in step S230 and step S240. In a case where there is no conforming option, the construction method selector 354 may display an error on the display 320.

The design and construction assistance device 30 generates and outputs a 3D construction drawing and a 2D production drawing through the subsequent processes in steps S230, S240, and S250. The processes in steps S230, S240, and S250 are the same as the processes illustrated in Fig. 24, and thus a description thereof will not be repeated.

As described above, the design and construction assistance device 30 according to the present embodiment includes the construction material information acquirer 353 (an example of a first acquirer), the structure acquirer 355 (an example of a second acquirer), the production drawing generator 356, and the output 359. The construction material information acquirer 353 acquires first information including at least dimension data of a construction material to be attached to a target surface. The structure acquirer 355 acquires second information indicating the type of attachment structure when a construction material panel (an example of a construction material) is attached to the target surface. The production drawing generator 356 generates a production drawing for processing the construction material panel on the basis of the first information, the second information, and processing rules set for each type of attachment structure. The output 359 outputs the production drawing generated by the production drawing generator 356.

Consequently, the design and construction assistance device 30 can suppress repetition of complicated work such as correction or change between a designer and a processor, to save time and effort when processing a construction material panel to be attached to a target surface. In other words, it is possible to provide the design and construction assistance device 30 that automatically creates a more detailed production drawing (a working drawing, a general drawing, or the like) when a construction material to be attached to a target surface is processed.

For example, the production drawing generator 356 generates a production drawing further on the basis of applicable regulations when generating the production drawing for processing the construction material panel. Consequently, the design and construction assistance device 30 can generate a production drawing conforming to a regulation in a location (for example, a country) in which construction is to be performed.

The structure acquirer 355 acquires, as the second information, information indicating the type of attachment structure selected on the basis of the applicable regulations from among a plurality of types of attachment structures. Consequently, the design and construction assistance device 30 can generate a production drawing with which construction can be performed according to an attachment structure conforming to a regulation in a location (for example, a country) in which construction is to be performed.

The production drawing generator 356 may generate a production drawing further on the basis of a material of a construction material panel when generating the production drawing for processing the construction material panel. Consequently, the design and construction assistance device 30 can generate a production drawing with which construction can be performed according to an attachment structure suitable for a material of a construction material panel.

For example, the weight, the strength, or the appropriate attachment method differs depending on a material of a construction material panel. Thus, the production drawing generator 356 can generate a production drawing with which construction can be performed according to an attachment structure suitable for the weight, the strength, the appropriate attachment method, or the like in accordance with a material of a construction material panel.

The production drawing generator 356 may generate a production drawing further on the basis of details designated for a side to which a construction material panel is to be attached when generating the production drawing for processing the construction material panel. The content designated for the side to which the construction material panel is to be attached is the type of a base material (the type of material of a base) of a target surface, a shape of the base material, or the like. Consequently, the design and construction assistance device 30 can generate a production drawing with which construction can be performed according to an attachment structure suitable for details (the type of base material (the type of material of a base), the shape of the base material, or the like) designated for a side to which a construction material panel is to be attached. The base material includes not only a heat insulating material but also a member that connects a decorative material such as a construction material panel to a skeleton such as concrete. The base material includes a primary base material and a secondary base material. In a broader sense, the base material is a concept that also includes the above-described mold material.

The production drawing generator 356 generates a production drawing to which information regarding a reinforcing material of a construction material panel is added when generating the production drawing for processing the construction material panel. The reinforcing material is a prismatic member attached to a rear side of the construction material panel or the like in order to improve the strength of a construction material such as the construction material panel. Auxiliary parts such as metal fittings may be used for the attachment. An adhesive may also be used to join the panel rear surface to the reinforcing material. The information regarding the reinforcing material is the type, the number, a shape, an attachment position, or the like of the reinforcing material. Consequently, the design and construction assistance device 30 can provide information regarding necessary reinforcing materials in addition to the production drawing for processing a construction material panel.

The output 359 may further output information indicating a processing procedure when the construction material panel is processed on the basis of the production drawing generated by the production drawing generator 356. Consequently, the design and construction assistance device 30 can indicate a processing procedure in addition to a production drawing for processing a construction material panel. Therefore, it is possible to save time and effort when a construction material panel is processed and thus to improve efficiency of processing work and processing quality.

The design and construction assistance device 30 may further include the structural drawing generator 358 that generates an attachment structural drawing on the basis of the first information, the second information, and the processing rules. The output 359 may output the production drawing generated by the production drawing generator 356 and the attachment structural drawing generated by the structural drawing generator 358 in association with each other. Consequently, the design and construction assistance device 30 can also provide information regarding an attachment structural drawing in addition to a production drawing for processing a construction material panel.

The structural drawing generator 358 may generate the attachment structural drawing to which information regarding a heat insulating material is added. Consequently, the design and construction assistance device 30 can also provide information regarding a necessary heat insulating material in addition to a production drawing for processing a construction material panel. In other words, it is possible to provide the design and construction assistance device that automatically creates a more detailed design drawing (construction drawing) when a construction material to be attached to a target surface is processed.

The design and construction assistance system 1 according to the present embodiment includes the target surface data acquirer 252 (an example of a third acquirer), the receptioner 253, the arrangement information generator 256, the output 259 (an example of a first output), the construction material information acquirer 353 (an example of a first acquirer), the structure acquirer 355 (an example of a second acquirer), the production drawing generator 356, and the output 359 (an example of a second output). The target surface data acquirer 252 acquires target surface data from the target surface data storage 241 (an example of a storage) that stores data regarding a plurality of target surfaces that are targets to which a construction material panel (an example of a construction material) is to be attached. The receptioner 253 receives information regarding dimensions designated as reference dimensions of the construction material panel to be attached to the target surface. The arrangement information generator 256 generates arrangement information regarding the number, dimensions, and arrangement of the construction material panel to be attached to the target surface according to a predetermined arrangement rule on the basis of the target surface data and the designated dimensions. The output 259 outputs the arrangement information generated by the arrangement information generator 256. The construction material information acquirer 353 acquires first information including at least dimension data of the construction material to be attached to the target surface. The structure acquirer 355 acquires second information indicating the type of attachment structure when the construction material panel (an example of a construction material) is attached to the target surface. The production drawing generator 356 generates a production drawing for processing the construction material panel on the basis of the first information, the second information, and processing rules set for each type of attachment structure.

The output 359 outputs the production drawing generated by the production drawing generator 356.

Consequently, the design and construction assistance system 1 can automatically allocate a construction material panel to a target surface, and can also automatically generate a production drawing for processing the allocated construction material panel on the basis of an attachment structure. Therefore, it is possible to suppress repetition of complicated work such as correction or change between a designer and a processor, to save time and effort when processing a construction material panel to be attached to a target surface.

The design and construction assistance system 1 further includes the weight information acquirer 255 (an example of a fourth acquirer) and the weight calculator 257 (an example of a calculator). The weight information acquirer 255 acquires weight information regarding the weight of the construction material panel per unit area from the construction material information storage 242 (an example of a storage) that stores information regarding the construction material panel. The weight calculator 257 calculates the weight of the construction material panel to be attached to the target surface on the basis of the arrangement information generated by the arrangement information generator 256 and the weight information acquired by the weight information acquirer 255. The output 259 outputs the arrangement information generated by the arrangement information generator 256 and attribute information including at least the information regarding the weight calculated by the weight calculator 257 in association with each other. The construction material information acquirer 353 acquires the first information on the basis of the arrangement information and the attribute information output by the output 259. The production drawing generator 356 generates a production drawing for processing the construction material panel on the basis of at least the information regarding the dimensions and the weight of the construction material panel to be arranged on the target surface in the first information, the second information, and the processing rules.

Consequently, the design and construction assistance system 1 can automatically allocate a construction material panel to a target surface, and can also automatically generate a production drawing for processing the allocated construction material panel on the basis of the weight of the allocated construction material panel and an attachment structure. Therefore, it is possible to suppress repetition of complicated work such as correction or change between a designer and a processor, to save time and effort when processing a construction material panel to be attached to a target surface.

The target surface data acquirer 252 acquires target surface data from the target surface data storage 241 (an example of a storage) that stores three-dimensional data (3D data) including a plurality of target surfaces that are targets to which a construction material panel (an example of a construction material) is to be attached. The arrangement information generator 256 generates arrangement information regarding the number, dimensions, and arrangement of the construction material panel to be arranged on the plurality of target surfaces according to a predetermined arrangement rule on the basis of the 3D data and the designated dimensions of the target surface. The arrangement information generator 256 generates the arrangement information in which a specific construction material that is attached over a first target surface and a second target surface out of the plurality of target surfaces and has a specific shape and dimensions is arranged at a protruding corner and/or a recessed corner between the first target surface and the second target surface.

Consequently, the design and construction assistance system 1 can automatically allocate a construction material panel not only to a two-dimensional target surface but also to a protruding corner and/or a recessed corner over a plurality of three-dimensional target surfaces, and can also automatically generate a production drawing for processing the allocated construction material panel on the basis of an attachment structure. Therefore, it is possible to suppress repetition of complicated work such as correction or change between a designer and a processor, to save time and effort when processing a construction material panel to be attached to a target surface.

Figs. 19 to 23 illustrate an example of a production drawing in a case of a flat construction material panel, but a production drawing for a construction material panel to be attached to a protruding corner is added with at least a mountain fold location in the face panel P portion, and a shape of a fold margin portion is a shape corresponding to the mountain fold. A production drawing for a construction material panel to be attached to a recessed corner is added with at least a valley fold location in the face panel P portion, and a shape of a fold margin portion is a shape corresponding to the valley fold.

As mentioned above, an embodiment of the invention has been described in detail with reference to the drawings, but a specific configuration is not limited to the above configuration, and various design changes can be made within the scope without departing from the spirit of the invention.

For example, in the above-described embodiment, the case where a shape of a construction material panel to be attached to a target surface is rectangular or square has been described as an example, but the shape of the construction material panel is not limited thereto, and may be a triangular shape or a polygonal shape of a pentagonal shape or more, and may be various shapes such as a circular shape, a diamond shape, or a special shape. In the above-described embodiment, an example in which a construction material panel is a flat plate or the flat plate is mountain-folded or valley-folded and attached has been described, but the construction material panel is limited to the flat plate, and may have a three-dimensional shape including a curved surface, a protrusion part, a depression part, and the like.

Some or all of the functions of each of the 3D-CAD device 10, the construction material arrangement processing device 20, and the design and construction assistance device 30 in the above-described embodiment may be realized by a computer. In this case, the functions may be realized by recording a program for realizing the functions on a computer readable recording medium, reading the program recorded on the recording medium to a computer system, and executing the program. The "computer system" described here is a computer system built into each of the 3D-CAD device 10, the construction material arrangement processing device 20, and the design and construction assistance device 30, and includes an OS or hardware such as peripheral devices. The "computer readable recording medium" refers to a portable medium such as a flexible disk, a magnetooptical disc, a ROM, or a CD-ROM, or a storage device such as a hard disk built into a computer system. The "computer readable recording medium" may include a medium that dynamically stores the program for a short period of time, such as a communication wire when the program is transmitted via a network such as the Internet or a communication line such as a telephone line, and a medium that stores the program for a predetermined time, such as a volatile memory inside the computer system serving as a server or a client in that case. The program may be a program for realizing some of the functions described above, and may be a program that can realize the functions in combination with a program already recorded in the computer system.

Some or all of the 3D-CAD device 10, the construction material arrangement processing device 20, and the design and construction assistance device 30 may be implemented as integrated circuits such as a large scale integration (LSI). The constituents of each of the 3D-CAD device 10, the construction material arrangement processing device 20, and the design and construction assistance device 30 according to the present embodiment may be individually implemented as processors, and some or all of the constituents may be integrated into a processor. A method of making an integrated circuit is not limited to an LSI, and may be realized by a dedicated circuit or a general-purpose processor. In a case where an integrated circuit technology that replaces an LSI appears with the advance of semiconductor technologies, an integrated circuit based on this technology may be used.

### [Reference Signs List]

- 1: Design and construction assistance system
- 10: 3D-CAD device
- 20: Construction material arrangement processing device
- 30: Design and construction assistance device
- 210: Communicator
- 220: Display
- 230: Input
- 240: Storage
- 241: Target surface data storage
- 242: Construction material information storage
- 243: Reference data storage
- 244: Arrangement rule storage
- 245: Arrangement information storage
- 250: Controller
- 251: Structure design data acquirer
- 252: Target surface data acquirer
- 253: Receptioner
- 254: Construction material selector
- 255: Weight information acquirer
- 256: Arrangement information generator
- 257: Weight calculator
- 258: Image generator
- 259: Output
- 310: Communicator
- 320: Display
- 330: Input
- 340: Storage
- 341: Target surface data storage
- 342: Arrangement information storage
- 343: Regulation rule storage
- 344: Processing rule storage
- 345: Production drawing storage
- 346: Processing information storage
- 347: Structural drawing storage
- 350: Controller
- 351: Arrangement information acquirer
- 352: Receptioner
- 353: Construction material information acquirer
- 354: Construction method selector
- 355: Structure acquirer
- 356: Production drawing generator
- 357: Processing information acquirer
- 358: Structural drawing generator
- 359: Output

## Claims

1. A design and construction assistance device comprising:
a first acquirer configured to acquire first information including at least dimension data of a construction material to be attached to a target surface;
a second acquirer configured to acquire second information indicating the type of attachment structure when the construction material is attached to the target surface;
a production drawing generator configured to generate a production drawing for processing the construction material on the basis of the first information, the second information, and processing rules set for each type of attachment structure; and
an output configured to output the production drawing generated by the production drawing generator.

2. The design and construction assistance device according to claim 1, wherein the production drawing generator configured to generate the production drawing additionally on the basis of applicable regulations when generating the production drawing for processing the construction material.

3. The design and construction assistance device according to claim 2, wherein the second acquirer configured to acquire the second information indicating the type of attachment structure selected on the basis of the applicable regulations from among a plurality of types of attachment structures.

4. The design and construction assistance device according to according to any one of claims 1 to 3,
wherein the production drawing generator configured to generate the production drawing further on the basis of a material of the construction material when generating the production drawing for processing the construction material.

5. The design and construction assistance device according to according to any one of claims 1 to 4,
wherein the production drawing generator configured to generate the production drawing further on the basis of details designated for a side to which the construction material is to be attached when generating the production drawing for processing the construction material.

6. The design and construction assistance device according to any one of claims 1 to 5,
wherein the production drawing generator configured to generate the production drawing to which information regarding a reinforcing material of the construction material is added when generating the production drawing for processing the construction material.

7. The design and construction assistance device according to any one of claims 1 to 6,
wherein the output is further configured to output information indicating a processing procedure when the construction material is processed on the basis of the production drawing generated by the production drawing generator.

8. The design and construction assistance device according to any one of claims 1 to 7, the design and construction assistance device further comprising:
a structural drawing generator configured to generate an attachment structural drawing on the basis of the first information, the second information, and the processing rules,
wherein the output is configured to output the production drawing generated by the production drawing generator and the attachment structural drawing generated by the structural drawing generator in association with each other.

9. The design and construction assistance device according to claim 8,
wherein the structural drawing generator is configured to generate the attachment structural drawing to which information regarding a heat insulating material is added.

10. A design and construction assistance system comprising:
a third acquirer configured to acquire target surface data from a storage storing data regarding a target surface that is a target to which a construction material is to be attached;
a receptioner that receives information regarding dimensions designated as reference dimensions of the construction material to be attached to the target surface;
an arrangement information generator configured to generate arrangement information regarding the number, dimensions, and arrangement of the construction material to be arranged on the target surface according to predetermined arrangement rules on the basis of the target surface data and the designated dimensions;
a first output configured to output the arrangement information generated by the arrangement information generator;
a first acquirer configured to acquire, as first information, the arrangement information output by the first output;
a second acquirer configured to acquire second information indicating the type of attachment structure when the construction material is attached to the target surface;
a production drawing generator configured to generate a production drawing for processing the construction material on the basis of at least information regarding the dimensions of the construction material to be arranged on the target surface in the first information, the second information, and processing rules set for each type of attachment structure; and
a second output configured to output the production drawing generated by the production drawing generator.

11. The design and construction assistance system according to claim 10, the design and construction assistance system further comprising:
a fourth acquirer configured to acquire weight information regarding the weight of the construction material per unit area from a storage storing information regarding the construction material; and
a calculator that calculates the weight of the construction material to be attached to the target surface on the basis of the arrangement information generated by the arrangement information generator and the weight information,
wherein the first output is configured to output the arrangement information generated by the arrangement information generator and attribute information including at least information regarding the weight calculated by the calculator in association with each other, and
wherein the first acquirer is configured to acquire the first information on the basis of the arrangement information and the attribute information output by the first output, and
wherein the production drawing generator is configured to generate the production drawing for processing the construction material on the basis of at least the information regarding the dimensions and the weight of the construction material to be arranged on the target surface in the first information, the second information, and the processing rules.

12. The design and construction assistance system according to claim 10 or 11,
wherein the third acquirer is configured to acquire the target surface data from a storage storing three-dimensional data including a plurality of target surfaces that are targets to which the construction material is to be attached, and
wherein the arrangement information generator is configured to generate arrangement information regarding the number, dimensions, and arrangement of the construction material to be arranged on the plurality of target surfaces according to a predetermined arrangement rule on the basis of the three-dimensional data and the designated dimensions of the target surface, and is configured to generate the arrangement information in which a specific construction material that is attached over a first target surface and a second target surface out of the plurality of target surfaces and has a specific shape and dimensions is arranged at a protruding corner and/or a recessed corner between the first target surface and the second target surface.

13. A design and construction assistance method in a design and construction assistance device, the design and construction assistance method comprising:
causing a first acquirer to acquire first information including at least dimension data of a construction material to be attached to a target surface;
causing a second acquirer to acquire second information indicating the type of attachment structure when the construction material is attached to the target surface;
causing a production drawing generator to generate a production drawing for processing the construction material on the basis of the first information, the second information, and processing rules set for each type of attachment structure; and
causing an output to output the production drawing generated by the production drawing generator.

14. A design and construction assistance method in a design and construction assistance system, the design and construction assistance method comprising:
causing a third acquirer to acquire target surface data from a storage storing data regarding a target surface that is a target to which a construction material is to be attached;
causing a receptioner to receive information regarding dimensions designated as reference dimensions of the construction material to be attached to the target surface;
causing an arrangement information generator to generate arrangement information regarding the number, dimensions, and arrangement of the construction material to be attached to the target surface according to a predetermined arrangement rule on the basis of the target surface data and the designated dimensions;
causing a first output to output the arrangement information generated by the arrangement information generator;
causing a first acquirer to acquire, as first information, the arrangement information output by the first output;
causing a second acquirer to acquire second information indicating the type of attachment structure when the construction material is attached to the target surface;
causing a production drawing generator to generate a production drawing for processing the construction material on the basis of at least information regarding the dimensions of the construction material to be arranged on the target surface in the first information, the second information, and processing rules set for each type of attachment structure; and
causing a second output to output the production drawing generated by the production drawing generator.

15. A program causing a computer to execute:
acquiring first information including at least dimension data of a construction material to be attached to a target surface;
acquiring second information indicating the type of attachment structure when the construction material is attached to the target surface;
generating a production drawing for processing the construction material on the basis of the first information, the second information, and processing rules set for each type of attachment structure; and
outputting the generated production drawing.

16. A program causing a computer to execute:
acquiring target surface data from a storage storing data regarding a target surface that is a target to which a construction material is to be attached;
receiving information regarding dimensions designated as reference dimensions of the construction material to be attached to the target surface;
generating arrangement information regarding the number, dimensions, and arrangement of the construction material to be attached to the target surface according to a predetermined arrangement rule on the basis of the target surface data and the designated dimensions;
outputting the generated arrangement information;
acquiring the arrangement information as first information;
acquiring second information indicating the type of attachment structure when the construction material is attached to the target surface;
generating a production drawing for processing the construction material on the basis of at least information regarding the dimensions of the construction material to be arranged on the target surface in the first information, the second information, and processing rules set for each type of attachment structure; and
outputting the generated production drawing.
